# EUROPÄISCHE PATENTSCHRIFT

(11) **EP 3 531 844 B1**
(45) Veröffentlichungstag und Bekanntmachung des Hinweises auf die Patenterteilung: **09.09.2020**
(21) Anmeldenummer: 17808744.1
(22) Anmeldetag: 27.10.2017
(51) Int. Cl.: A23L 2/78, A23L 3/02, B01J 41/12, B01J 39/18, C02F 9/00, A23L 3/00, A23L 2/46, A23L 3/04, C02F 1/66, C02F 1/28, C02F 1/44, C02F 1/42, C02F 103/32

(54) **PASTEURISIERUNGSANLAGE MIT IONENAUSTAUSCHVORRICHTUNG UND MEMBRANFILTRATIONSVORRICHTUNG UND VERFAHREN ZUM BETREIBEN EINER PASTEURISIERUNGSANLAGE**
PASTEURIZATION SYSTEM HAVING AN ION-EXCHANGE DEVICE AND A MEMBRANE FILTRATION DEVICE, AND METHOD FOR OPERATING A PASTEURIZATION SYSTEM
INSTALLATION DE PASTEURISATION COMPRENANT UN DISPOSITIF D'ÉCHANGE D'IONS ET UN DISPOSITIF DE FILTRATION SUR MEMBRANE ET PROCÉDÉ POUR FAIRE FONCTIONNER UNE INSTALLATION DE PASTEURISATION

(30) Priorität: 27.10.2016 AT 509882016
(43) Veröffentlichungstag der Anmeldung: 04.09.2019
(73) Patentinhaber: Red Bull GmbH, 5330 Fuschl am See (AT)
(72) Erfinder: DEMOULIN, Gunnar, 5026 Salzburg (AT); CONCIN, Roland, 5330 Fuschl am See (AT); RINDERER, Christian, 5330 Fuschl am See (AT)
(74) Vertreter: Burger, Hannes
(86) Internationale Anmeldenummer: PCT/AT2017/060288
(87) Internationale Veröffentlichungsnummer: WO 2018/076034

(56) Entgegenhaltungen:
- WO-A1-2010/083574
- US-A1- 2002 153 319
- US-A1- 2009 324 790
- Anonymous: "Pasteurization in beer production - Efficiency Finder", , 4. Mai 2015 (2015-05-04), XP055437486, Gefunden im Internet: URL:http://wiki.zero-emissions.at/index.ph p?title=Pasteurization_in_beer_production [gefunden am 2017-12-21]

## Beschreibung

Die Erfindung betrifft eine Pasteurisierungsanlage für in verschlossenen Behältnissen abgefüllte Lebensmittel, sowie ein Verfahren zum Betreiben einer Pasteurisierungsanlage. Pasteurisierungsanlagen dienen zum Haltbarmachen von Lebensmitteln durch gezielte Temperierung der Lebensmittel. Die Lebensmittel werden zur Eliminierung lebensfähiger Mikroorganismen üblicherweise auf ein erhöhtes Temperaturniveau erhitzt und für eine bestimmte Zeitdauer auf diesem erhöhten Temperaturniveau gehalten. In häufigen Fällen werden die Lebensmittel vor der Pasteurisierung in Behältnisse abgefüllt und die Behältnisse verschlossen, und zur Temperierung bzw. Pasteurisierung der Lebensmittel eine temperierte bzw. erhitzte Behandlungsflüssigkeit auf eine Außenseite der Behältnisse appliziert. Auf diese Weise kann ein bereits lagerungs- bzw. verkaufsfertiges Produkt bereitgestellt werden.

Häufig werden sogenannte Tunnelpasteure eingesetzt, bei welchen bereits mit Lebensmittel befüllte und verschlossenen Behältnisse durch eine oder mehrere Behandlungszonen geführt werden, und in einer jeweiligen Behandlungszone mit einer temperierten Behandlungsflüssigkeit übergossen bzw. besprüht werden. Üblicherweise wird eine wässrige Behandlungsflüssigkeit eingesetzt, welche zur Wiederverwendung zumindest teilweise in einem Kreislauf um die Behandlungszone(n) geführt wird. Dies dient einerseits zur Verringerung der Menge von allenfalls zuzuführender, frischer Behandlungsflüssigkeit bzw. Frischwasser. Andererseits kann auf diese Weise auch der zum Temperieren der Behandlungsflüssigkeit erforderliche Energieaufwand gesenkt werden.

Bei derartiger Kreislaufführung der Behandlungsflüssigkeit, insbesondere bei andauernder bzw. fortwährender Kreislaufführung kann nicht vermieden werden, dass im Betrieb einer Anlage mit der Zeit Verunreinigungen in die wässrige Behandlungsflüssigkeit eingetragen werden. Quellen für solche Verunreinigungen können etwa die Umgebungsluft, Kühltürme zum bedarfsweisen Abkühlen der Behandlungsflüssigkeit, Bedienpersonal, oder etwa die Behältnisse oder deren Inhalt sein. Beispielsweise können im Zuge der Herstellung der Behältnisse Verunreinigungen an der Außenseite der Behältnisse verbleiben, beispielsweise aufgrund spanabhebender Verarbeitungsschritte, etc.. Auch kann es vorkommen, dass aufgrund von geringfügig undichten Behältnissen Lebensmittelbestandteile während des Betriebs einer Pasteurisierungsanlage in die Behandlungsflüssigkeit gelangen. Undichtigkeiten treten hierbei häufig im Bereich der Verschlüsse der Behältnisse auf, zum Beispiel bei Schraubverschlüssen von Getränkeflaschen oder bei Verschlüssen von Getränkedosen.

In der Vergangenheit wurden bereits Maßnahmen zur Entfernung von Verunreinigungen aus einer im Kreis geführten Behandlungsflüssigkeit einer Pasteurisierungsanlage vorgeschlagen. Vorwiegend wurden Maßnahmen zur Reinigung vorgeschlagen, welche primär auf die Entfernung von filtrierbaren und/oder absetzbaren, partikulären Stoffe abzielen. Solche Maßnahmen betreffen hauptsächlich eine Filtration von großkörnigen Stoffen, oder deren Abtrennung durch schwerkraftunterstützte Sedimentation, siehe zum Beispiel EP 2 722 089 A1.

Ebenso wurden bereits Maßnahmen vorgeschlagen, mittels welchen auch fein- bis feinstkörnige Stoffe, inklusive Mikroorganismen aus einer im Kreislauf geführten Behandlungsflüssigkeit entfernbar sind. In dieser Hinsicht können beispielsweise gute Ergebnisse mit den in der WO 2016/100996 A1 vorgeschlagenen Maßnahmen erzielt werden, welche WO 2016/100996 A1 auf die Anmelderin zurückgeht. Durch die in der WO 2016/100996 A1 offenbarten Maßnahmen kann grundsätzlich eine ungetrübte, zumindest vorwiegend keimfreie Behandlungsflüssigkeit erhalten werden.

Bei fortwährender bzw. andauernder Kreislaufführung einer wässrigen Behandlungsflüssigkeit in Pasteurisierungsanlagen, können eingetragene Stoffe jedoch auch in gelöster, ionischer Form vorliegen, bzw. eingetragene Verunreinigungen mit der Zeit von der Behandlungsflüssigkeit in Form von Ionen aufgelöst werden. Dies steht in Zusammenhang mit einer jeweiligen, chemischen Zusammensetzung und weiteren Parametern der Behandlungsflüssigkeit. So kann ein Auflösen von Stoffen bzw. Verunreinigungen bzw. ein Vorliegen von gelösten Ionen beispielsweise durch erhöhte Temperatur oder durch einen jeweiligen pH-Wert der Behandlungsflüssigkeit begünstigt werden.

Viele Ionen in einer Behandlungsflüssigkeit einer Pasteurisierungsanlage sind grundsätzlich unerwünscht. Als Beispiel seien gelöste Aluminium-Ionen oder Ionen von Aluminiumverbindungen genannt, welche medizinisch in Verbindung mit Gesundheitsbeeinträchtigungen gebracht werden. Selbiges gilt auch für andere Metallkationen, beispielsweise Schwermetallkationen, aber auch für andere, ionisch vorliegende Stoffe. Solche Ionen können sich bei fortwährender, vorwiegender Kreislaufführung einer Behandlungsflüssigkeit mit der Zeit in der Behandlungsflüssigkeit anreichern. Aluminium-Ionen oder -verbindungen treten beispielsweise häufig auf, da in Pasteurisierungsanlagen vielfach Aluminium aufweisende Behältnisse, etwa Behältnisse mit Aluminiumverschlüssen oder Getränkedosen aus Aluminium, behandelt werden.

Neben gesundheitlicher Bedenken können in einer Behandlungsflüssigkeit gelöste, ionische Stoffe im Zuge einer Behandlung von Behältnissen zwecks Pasteurisierung von Lebensmitteln weiters auch zu Komplikationen im Pasteurisierungsprozess selbst führen. Gelöste Ionen sind mittels Membranfiltrationsmethoden alleine nur bedingt bis kaum entfernbar. Bisher werden vorrangig Chemikalien zur Regulierung und Stabilisierung der chemischen Zusammensetzung einer Behandlungsflüssigkeit, bzw. zur Entfernung unerwünschter, gelöster Stoffe aus einer Behandlungsflüssigkeit eingesetzt, wie etwa Korrosionsinhibitoren, Wasserenthärter oder pH-Wert-Regulatoren, und natürlich Desinfektionsmittel bzw. antimikrobiell wirksame Substanzen. Dies bedingt jedoch wiederum einen meist ebenso unerwünschten, großen Eintrag dieser Chemikalien in die Behandlungsflüssigkeit, wobei auch diese Regulierungschemikalien wiederum zu unerwünschten Wechselwirkungen, zum Beispiel mit den behandelten Behältnissen selbst führen können. Des Weiteren ist ein fortwährender Einsatz großer Mengen an Chemikalien sehr kostenintensiv, und müssen Maßnahmen vorgesehen sein, um die Notwendigkeit eines Einsatzes solcher Regulationschemikalien detektieren zu können.

In "Pasteurization in beer production - Efficiency Finder", 4. Mai 2015, URL http://wiki.zeroemissions.at/index.php?title=Pasteurization_in_beer_production, ist ein Tunnelpasteur zur Pasteurisierung von in Flaschen oder Dosen abgefüllten Bier offenbart. Der beschriebene Tunnelpasteur umfasst Behandlungszonen zum Aufheizen, Pasteurisieren und Abkühlen des in Flaschen oder Dosen abgefüllten Biers. Das temperierte Behandlungswasser kann nach der Behandlung in den Behandlungszonen den Behandlungszonen zwecks Wiederverwendung wieder zugeführt werden.

Die US 2009/324790 A1 offenbart ein Verfahren und ein System zur Wiederaufbereitung von verwendeter Lebensmittelbehandlungsflüssigkeit. Das offenbarte Verfahren umfasst das Sammeln der verwendeten Behandlungsflüssigkeit, die Entfernung von festen Bestandteilen aus der gesammelten Behandlungsflüssigkeit, die Vereinigung der gesammelten Behandlungsflüssigkeit mit frischer Flüssigkeit und einem antimikrobiellen Wirkstoff. Des Weiteren ist die Wiederverwendung der vereinigten Behandlungsflüssigkeit in einem Lebensmittelprozess offenbart. Eine in der US 2009/324790 A1 offenbarte Vorrichtung zur Entfernung von festen Stoffen kann unter anderem eine Ionentauscher-Vorrichtung umfassen.

Die US 2002/153319 A1 offenbart ein Verfahren sowie einen Apparat für die Herstellung von ultrareinem Wasser. Eingangswasser aus einer Wasserquelle wird zur Herstellung von ultrareinem Wasser primär über eine Umkehrosmose-Vorrichtung geleitet, wobei das Eingangswasser vor dem Durchtritt durch die Umkehrosmose-Vorrichtung enthärtet wird. US 2002/153319 A1 offenbart, dass zur Herstellung des ultrareinen Wassers insbesondere bei ultrareinem Wasser für die Halbleiterindustrie auch Ionentauscher eingesetzt werden können.

Es besteht weiterer Verbesserungsbedarf bei Pasteurisierungsanlagen hinsichtlich einer kontinuierlichen Reinigung einer im Kreislauf geführten bzw. fortwährend wiederverwendeten Behandlungsflüssigkeit.

Aufgabe der vorliegenden Erfindung war es ein Verfahren zum Betreiben einer Pasteurisierungsanlage sowie eine Pasteurisierungsanlage zur Verfügung zu stellen, mittels derer im Betrieb der Pasteurisierungsanlage eine Behandlungsflüssigkeit bereitgestellt werden kann, welche möglichst frei von Verunreinigungen bzw. unerwünschten Stoffen ist.

Diese Aufgabe wird durch ein Verfahren und eine Pasteurisierungsanlage gemäß den Ansprüchen gelöst.

Das Verfahren zum Betreiben einer Pasteurisierungsanlage umfasst das Transportieren von mit Lebensmitteln befüllten und verschlossenen Behältnissen durch eine oder mehrere Behandlungszone(n), sowie ein Behandeln der Behältnisse mit einer temperierten, wässrigen Behandlungsflüssigkeit in der oder den Behandlungszone(n) durch Applizieren der Behandlungsflüssigkeit auf eine Außenseite der Behältnisse. Hierbei wird die Behandlungsflüssigkeit aus der oder den Behandlungszone(n) zur Wiederverwendung in mindestens einem Umlaufkreislauf wieder in eine Behandlungszone bzw. in eine der Behandlungszonen zurückgeführt. Hierbei kann zum Beispiel vorgesehen sein, dass ein Volumenstrom der Behandlungsflüssigkeit aus einer Behandlungszone über einen Umlaufkreislauf einer anderen Behandlungszone zugeführt wird.

Bei dem Verfahren wird fortwährend eine Teilmenge eines jeweils pro Zeiteinheit über den mindestens einen Umlaufkreislauf geführten Volumenstromes der Behandlungsflüssigkeit zur Bildung wenigstens eines Teilstromes der Behandlungsflüssigkeit abgezweigt. Es wird also aus zumindest einem gesamten, über einen Umlaufkreislauf bzw. einem der Umlaufkreisläufe geführten Volumenstrom der Behandlungsflüssigkeit wenigstens ein Teilstrom abgezweigt.

Dieser wenigstens eine, abgezweigte Teilstrom wird mittels einer Membranfiltrationsvorrichtung filtriert. Anschließend bzw. folgend werden aus dem wenigstens einen Teilstrom mittels einer Ionenaustauschvorrichtung, aufweisend mindestens einen, stark sauren Kationenaustauscher, gelöste Ionen abgezogen bzw. ausgetauscht. Darauf folgend wird der wenigstens eine Teilstrom wieder in einen Umlaufkreislauf oder eine Behandlungszone zurückgeführt. Vorzugsweise wird der wenigstens eine, abgezweigte Teilstrom wieder der Behandlungsflüssigkeit desselben Umlaufkreislaufes, aus der er abgezweigt wurde, zugeführt. Dies unter anderem deshalb, da ein Temperaturniveau des wenigstens einen Teilstromes zumindest im Wesentlichen jenem Temperaturniveau der in dem Umlaufkreislauf geführten Behandlungsflüssigkeit entspricht, und somit für eine etwaige, zusätzliche Temperierung des einer Behandlungszone zugeführten Stromes der Behandlungsflüssigkeit unberücksichtigt bleiben kann.

Es kann also vorgesehen sein, dass ein Teilstrom aus einem Umlaufkreislauf bzw. einem der Umlaufkreisläufe abgezweigt wird. Ebenso kann aber auch vorgesehen sein, dass aus mehreren Umlaufkreisläufen jeweils eine Teilmenge der pro Zeiteinheit über die mehreren Umlaufkreisläufe geführte Volumenströme der Behandlungsflüssigkeit zur Bildung mehrerer Teilströme jeweils abgezweigt werden. Ein jeweiliger Umlaufkreislauf kann hierbei zum Beispiel derart mit den Behandlungszonen leitungsverbunden sein, dass ein Volumenstrom der Behandlungsflüssigkeit aus einer Behandlungszone über einen Umlaufkreislauf einer anderen Behandlungszone zugeführt wird.

Durch das angegebene Verfahren können im laufenden Betrieb der Pasteurisierungsanlage fortwährend bzw. andauernd unerwünschte Stoffe aus der Behandlungsflüssigkeit entfernt werden. Dadurch kann einerseits eine möglichst ungetrübte und keimfreie Behandlungsflüssigkeit für den laufenden Betrieb einer Pasteurisierungsanlage bereitgestellt werden. Zusätzlich kann die Konzentration von unerwünschten Ionen möglichst geringgehalten werden, bzw. kann einem kontinuierlichen Anstieg der Konzentration unerwünschter Ionen, etwa Metallkationen wie zum Beispiel Aluminium-Ionen bzw. in ionischer Form vorliegende Aluminiumverbindungen, bei fortwährender Kreislaufführung bzw. Wiederverwendung der Behandlungsflüssigkeit entgegengewirkt werden. Insbesondere können Metallkationen mittels dem mindestens einen, stark sauren Kationenaustauschers der Ionenaustauschvorrichtung wirksam aus dem Teilstrom oder den Teilströmen entfernt werden. Vorteilhafterweise kann hierdurch in weiterer Folge der Einsatz an Chemikalien zur Regulierung bzw. Stabilisierung der fortwährend wiederverwendeten bzw. im Kreis geführten Behandlungsflüssigkeit zumindest deutlich reduziert werden. Durch die fortwährende Entnahme und Reinigung eines Teilstromes können außerdem weitere Mittel zur Reinigung der Behandlungsflüssigkeit, wie etwa Sedimentationsvorrichtungen oder Filteranlagen zur Abtrennung großer Partikel, gegebenenfalls erübrigt werden.

Außerdem können durch die kombinierte Reinigung des abgezweigten Teilstromes mittels Membranfiltrationsvorrichtung und Ionenaustauschvorrichtung vorteilhafte synergistische Effekte erzielt werden. Beispielsweise können mittels der Ionenaustauschvorrichtung gelöste Nährstoffe für Mikroorganismen aus der Behandlungsflüssigkeit entfernt werden, sodass das Wachstum von Mikroorganismen hierdurch zumindest begrenzt werden kann. In weiterer Folge kann dies positive Auswirkungen auf die Membranfiltration haben. Zum Beispiel kann die Bildung von Biofilmen auf den Filtermembranen der Membranfiltrationsvorrichtung, bzw. ein sogenanntes Bio-Fouling der Filtermembranen zumindest deutlich hinausgezögert werden. Hierdurch kann wiederum die erforderliche Membranfiltrationskapazität gesenkt werden, bzw. können die Zeitabstände zwischen allfällig notwendige Reinigungs- bzw. Rückspüloperationen für die Filtermembranen vergrößert werden.

Umgekehrt kann aber auch für die Ionenaustauschvorrichtung mittels der vorgeschalteten Membranfiltrationsvorrichtung ein von Trübungsstoffen bzw. koagulierten, partikulären Stoffen zumindest weitestgehend befreiter Teilstrom der Behandlungsflüssigkeit bereitgestellt werden. Hierdurch kann erst eine möglichst reibungslose und effiziente Entfernung mittels der Ionenaustauschvorrichtung durchgeführt werden. In diesem Zusammenhang ist die Ausfiltrierung von Fein- und Feinstpartikeln aus dem Teilstrom der Behandlungsflüssigkeit besonders vorteilhaft, da hierdurch ein potentielles Verblocken des oder der Ionenaustauscher(s) der Ionenaustauschvorrichtung durch diese kleinkörnig vorliegenden Stoffe hintangehalten werden kann, und somit ein effizienter Durchfluss der Behandlungsflüssigkeit durch die Ionenaustauschvorrichtung bereitgestellt werden kann. Insgesamt hat sich herausgestellt, dass sich die Filtration mittels der Membranfiltrationsvorrichtung und die Entfernung von Ionen mittels der Ionenaustauschvorrichtung hinsichtlich einer effizienten Reinigung der Behandlungsflüssigkeit bzw. eines abgezweigten Teilstromes hervorragend ergänzen.

Durch Verwendung mindestens eines, stark sauren Kationenaustauschers können zudem im Speziellen Metallkationen effizient aus dem Teilstrom der Behandlungsflüssigkeit entfernt werden, ohne durch andere Metallkationen ersetzt zu werden. Stattdessen können entfernte Kationen bzw. Metallkationen durch H⁺-Ionen ersetzt werden, welche gemäß dem allgemeinen Verständnis in der wässrigen Behandlungsflüssigkeit solvatisiert durch Wassermoleküle vorliegen, und üblicherweise als Oxonium- oder Hydronium-Ionen bezeichnet werden. Ein stark saurer Kationenaustauscher kann zum Beispiel eine Ionenaustauschermatrix bzw. ein Ionenaustauscherharz mit (protonierten) Sulfonsäuregruppen als aktive Austauschergruppen umfassen.

Insgesamt können durch die angegebenen Maßnahmen sowohl unerwünschte koagulierte bzw. partikuläre Stoffe, inklusive Mikroorganismen, als auch unerwünschte, gelöste Ionen fortwährend aus der Behandlungsflüssigkeit entfernt werden. In weiterer Folge können im Speziellen durch die Entfernung von Ionen mittels der Ionenaustauschvorrichtung auch unerwünschte Wechselwirkungen der Behandlungsflüssigkeit bzw. der darin gelösten Ionen mit den behandelten Behältnissen hintangehalten werden. Beispielsweise hat sich herausgestellt, dass durch die angegebenen Maßnahmen dem Auftreten der sogenannten Brunnenwasserschwärze bei Behandlung von einen Aluminiumwerkstoff aufweisenden Behältnissen wirksam hintangehalten werden kann. Ebenfalls kann durch die Filtrierung und Entfernung der gelösten, ionischen Stoffe beispielsweise einer Bildung von Ablagerungen an der Außenseite der behandelten Behältnisse entgegengewirkt werden.

Von Vorteil für eine derartige Reinigung von einem Teilstrom oder mehreren Teilströmen der Behandlungsflüssigkeit ist bei Pasteurisierungsanlagen auch die ständige Durchmischung der einzelnen Volumenelemente der Behandlungsflüssigkeit aufgrund des Fließens bzw. der Zwangsförderung der Behandlungsflüssigkeit über den Umlaufkreislauf oder die Umlaufkreisläufe. Eine solche Durchmischung ist zum Beispiel im Speziellen wirksam bei Pasteurisierungsanlagen, bei welchen Volumenströme der Behandlungsflüssigkeit aus Behandlungszonen abgeführt, und über Umlaufkreisläufe jeweils anderen Behandlungszonen wieder zugeführt werden. In anderen Worten ausgedrückt werden in solchen Fällen einzelne Volumenelemente der Behandlungsflüssigkeit im laufenden Betrieb mit der Zeit über wechselnde Umlaufkreisläufe geführt bzw. in und aus wechselnden Behandlungszonen zu- und abgeführt, sodass mit der Zeit letztlich dies gesamte Behandlungsflüssigkeit durch eine Reinigungsvorrichtung geführt wird.

Wie sich herausgestellt hat, muss daher in der Regel nicht aus einem jeweiligen Volumenstrom jedes Umlaufkreislaufes ein Teilstrom abgezweigt und gereinigt werden, sondern ist ein Abzweigen und Reinigen von Teilströmen aus einer Teilmenge der Umlaufkreisläufe ausreichend, um eine effiziente Reinigung der gesamten Behandlungsflüssigkeitsmenge in einer Pasteurisierungsanlage bereitstellen zu können. In vielen Fällen kann auch ein Abzweigen und Reinigen eines einzelnen Teilstromes aus einem Umlaufkreislauf hierzu voll auf genügen.

Bei einer bevorzugten Ausführungsform des Verfahrens kann in weiterer Folge vorgesehen sein, dass mittels des mindestens einen, stark sauren Kationenaustauschers ein pH-Wert des wenigstens einen Teilstromes hinsichtlich eines gewünschten pH-Niveaus beeinflusst wird.

Dies kann etwa in Abhängigkeit von einer jeweils nutzbaren Ionenaustauschkapazität des oder der stark sauren Kationenaustauscher(s) erfolgen. Zum Beispiel kann vorgesehen sein, dass zur Beeinflussung des pH-Wertes des Teilstromes eine Durchflussmenge durch den mindestens einen, stark sauren Kationenaustauscher reguliert bzw. geregelt wird. Dieser Aspekt wird nachfolgend noch näher erläutert. Mittels des mindestens eine, stark saure Kationenaustauscher werden bei Hindurchführung fortwährend Kationen, zumeist Metallkationen aus dem Teilstrom abgezogen bzw. entfernt, und stattdessen solvatisierte H⁺-Ionen an den Teilstrom abgegeben. Hierbei werden mehrfach geladenen Kationen, wie etwa solvatisierte Al³⁺-Ionen durch eine der Ladung der Kationen entsprechende Zahl an H⁺-Ionen ersetzt. Insgesamt kann bei Hindurchführung einer bestimmten Menge an Behandlungsflüssigkeit durch den mindestens einen, stark sauren Kationenaustauscher pro Zeiteinheit, eine gewünschte Absenkung des pH-Wertes des Teilstromes, und damit in weiterer Folge der gesamten Behandlungsflüssigkeit erzielt werden. Vorteilhafterweise kann dadurch ein Einsatz an pH-Wert-Regulationschemikalien, wie Säuren oder Basen, zur Beeinflussung des pH-Wertes der Behandlungsflüssigkeit zumindest deutlich reduziert werden. Im Zuge von Versuchen konnte festgestellt werden, dass ein geringfügig saures Niveau der wässrigen Behandlungsflüssigkeit von Pasteurisierungsanlagen von Vorteil sein kann, beispielsweise ein pH-Wert zwischen 4 und 7. Hierdurch kann zum Beispiel die Bildung der sogenannten Brunnenwasserschwärze an Aluminiumwerkstoffen an den behandelten Behältnissen hintangehalten werden. Ganz generell kann der pH-Wert der Behandlungsflüssigkeit hinsichtlich Wechselwirkung mit der jeweils behandelten Außenseite der Behältnisse eine große Rolle spielen. Eine Beeinflussung des pH-Wertes hinsichtlich eines für die Behandlungsflüssigkeit gewünschten Niveaus mittels der Ionenaustauschvorrichtung kann deshalb von großem Vorteil für das Verfahren sein.

In diesem Zusammenhang kann es auch von Vorteil sein, wenn der mindestens eine, stark saure Kationenaustauscher in Abhängigkeit von einer pH-Wert-Änderung des wenigstens einen Teilstromes bzw. der Behandlungsflüssigkeit regeneriert wird.

Wird zum Beispiel über pH-Wert-Messungen an dem Teilstrom festgestellt, dass der pH-Wert bei Hindurchführung der Behandlungsflüssigkeit durch den mindestens einen Kationenaustauscher nicht mehr wesentlich abgesenkt werden kann, kann eine Regenerierung des mindestens einen, stark sauren Kationenaustauschers durchgeführt werden. Zur Einstellung bzw. Stabilisierung des pH-Wertes auf ein gewünschtes Niveau können der Behandlungsflüssigkeit während einer Regenerierung des mindestens einen Kationenaustauschers gegebenenfalls ersatzweise pH-Regulierungsmittel, also zum Beispiel Säuren zugesetzt werden. Falls die Ionenaustauschvorrichtung mehrere stark saure Kationenaustauscher umfasst, oder falls mehrere Ionenaustauschvorrichtungen vorgesehen sind, kann ein ersatzweises Zusetzen von pH-Regulationsmitteln gegebenenfalls erübrigt werden. Durch die Regenerierung kann sodann wieder ein Kationenaustauscher mit ausreichender Ionenaustauschkapazität bereitgestellt werden.

Bei einer Weiterbildung kann aber auch vorgesehen sein, dass Anionen mittels mindestens eines stark basischen Anionenaustauschers aus dem wenigstens einen Teilstrom abgezogen bzw. ausgetauscht werden.

Auf diese Weise können auch unerwünschte Anionen aus dem wenigstens einem Teilstrom der Behandlungsflüssigkeit abgezogen bzw. entfernt werden.

Auch hierbei kann in weiterer Folge vorgesehen sein, dass mittels des mindestens einen, stark basischen Anionenaustauschers ein pH-Wert des wenigstens einen Teilstromes hinsichtlich eines gewünschten pH-Niveaus beeinflusst wird.

Beispielsweise kann wiederum vorgesehen sein, dass zur Beeinflussung des pH-Wertes des Teilstromes eine Durchflussmenge durch den mindestens einen, stark basischen Anionenaustauscher reguliert bzw. geregelt wird. Grundsätzlich kann eine jeweilige Anzahl und Austauschkapazität der stark sauren Kationenaustauscher und der stark basischen Anionenaustauscher hinsichtlich eines jeweils gewünschten pH-Niveaus der Behandlungsflüssigkeit gewählt bzw. angepasst sein, wie dies noch erläutert wird. Wie sich herausgestellt hat, kann bei einer wässrigen Behandlungsflüssigkeit für Pasteurisierungsanlagen ein pH-Wert kleiner als 8, insbesondere zwischen 4 und 7 vorteilhaft sein, beispielsweise um der Bildung der sogenannten Brunnenwasserschwärze an Aluminiumwerkstoffen an den behandelten Behältnissen entgegen zu wirken. Andererseits kann durch die Beeinflussung des pH-Niveaus der Behandlungsflüssigkeit mittels des mindestens einen Kationenaustauschers und/oder des mindestens einen Anionenaustauschers der Ionenaustauschvorrichtung beispielsweise verhindert werden, dass der pH-Wert zu weit absinkt. Hierdurch kann zum Beispiel ein An- bzw. Auflösen eines Aluminiumwerkstoffes der Behältnisse durch die Behandlungsflüssigkeit hintangehalten werden.

Auch in diesem Zusammenhang kann eine Ausführungsform sinnvoll sein, bei welcher der mindestens eine, stark basische Anionenaustauscher in Abhängigkeit von einer pH-Wert-Änderung des wenigstens einen Teilstromes regeneriert wird.

Eine Regenerierung des mindestens einen, stark basischen Anionenaustauschers kann zum Beispiel dann durchgeführt werden, wenn aufgrund von pH-Wertmessungen des wenigstens einen Teilstromes festgestellt wird, dass der pH-Wert des Teilstromes bei Hindurchführung durch die Ionenaustauschvorrichtung stark bzw. zu stark absinkt. Dies kann ein Zeichen für eine nicht mehr ausreichende Ionenaustauschkapazität des Anionenaustauschers sein. Durch Regenerierung kann ein stark basischer Anionenaustauscher wiederum mit ausreichender, nutzbarer Ionenaustauschkapazität zur Verfügung gestellt werden.

Bei einer Weiterbildung kann vorgesehen sein, dass ein Gehalt gelöster Ionen in dem Teilstrom jeweils vor und nach der Ionenaustauschvorrichtung sensorisch überwacht wird.

Auf diese Weise kann einerseits der Ionenaustauschvorgang überwacht werden. Mittels sensorischer Überwachung des Gehaltes gelöster Ionen in dem Teilstrom kann aber auch die Reinheit bzw. Qualität der wässrigen Behandlungsflüssigkeit grundsätzlich überwacht werden. Zur sensorischen Überwachung des Gehalts an Ionen können beispielsweise strömungstechnisch jeweils vor und nach der Ionenaustauschvorrichtung angeordnete Leitfähigkeitssensoren eingesetzt werden.

Es kann aber auch zweckmäßig sein, wenn ein Gehalt bzw. eine Konzentration gelöster Ionen in dem wenigstens einen Teilstrom durch Messung eines pH-Wert des wenigstens einen Teilstromes jeweils vor und nach dem Abziehen von Ionen mittels der Ionenaustauschvorrichtung, überwacht wird.

Auch hierdurch kann auf den Gehalt gelöster Ionen in der Behandlungsflüssigkeit rückgeschlossen werden, da eine Veränderung des pH-Wertes des Teilstromes nach Hindurchführung durch die Ionenaustauschvorrichtung unmittelbar mit der Menge an gelösten Ionen in der Behandlungsflüssigkeit in Zusammenhang steht. Dies insbesondere bei zumindest ungefährer Kenntnis einer jeweils gerade nutzbaren Ionenaustauschkapazität aller vorhandenen, stark sauren Kationenaustauscher und stark basischen Anionenaustauscher der Ionenaustauschvorrichtung bzw. einer der Ionenaustauschvorrichtungen. Von Vorteil ist hierbei im Speziellen die Möglichkeit, mittels einer vergleichsweise simplen pH-Wertmessung Rückschlüsse auf den Ionengehalt bzw. die die Qualität der wässrigen Behandlungsflüssigkeit tätigen zu können. Diese Maßnahme ist natürlich vor allem dann wirksam einsetzbar, wenn eine jeweils nutzbare Ionenaustauschkapazität aller vorhandenen, stark sauren Kationenaustauscher nicht gleich einer jeweils nutzbaren Ionenaustauschkapazität aller vorhandenen, stark basischen Anionenaustauscher ist, oder wenn die Ionenaustauschvorrichtung beispielsweise gar keine stark basischen Anionenaustauscher aufweist. Grundsätzlich gilt hierbei, dass der pH-Wert mittels der Ionenaustauschvorrichtung stärker beeinflusst bzw. verändert werden kann, je mehr Ionen in der Behandlungsflüssigkeit gelöst sind.

Generell kann eine Ausführungsform des Verfahrens vorteilhaft sein, bei welcher die zur Bildung des wenigstens einen Teilstromes, zumindest eine abgezweigte Teilmenge an Behandlungsflüssigkeit mittels einer Durchflussmengenregulierungsvorrichtung geregelt wird.

Durch diese Maßnahme kann die zur Bildung des wenigstens einen Teilstromes aus einem Umlaufkreislauf abgezweigte Menge an Behandlungsflüssigkeit gezielt beeinflusst bzw. festgelegt werden. Hierdurch kann die jeweils abgezweigte, zumindest eine Teilmenge an Behandlungsflüssigkeit einem jeweiligen Verunreinigungsgrad der Behandlungsflüssigkeit entsprechend angepasst werden. Dies sowohl betreffend filtrierbare, partikuläre bzw. koagulierte Stoffe, als auch unerwünschte, gelöste Ionen in der Behandlungsflüssigkeit. Des Weiteren ist hierdurch auch eine Steuerungsmöglichkeit geschaffen, um einen pH-Wert des Teilstromes bzw. damit auch der Behandlungsflüssigkeit in Richtung eines jeweils gewünschten Niveaus zu beeinflussen. Dies in Zusammenhang mit einem Verhältnis von jeweils einer nutzbaren Ionenaustauschkapazität der vorhandenen, stark sauren Kationenaustauscher und stark basischen Anionenaustauscher. Wird ein aus einem Umlaufkreislauf abgezweigter Teilstrom beispielsweise über eine Ionenaustauschvorrichtung mit höherer, stark saurer Kationenaustauschkapazität als stark basischer Anionenaustaschkapazität geführt, kann durch Erhöhung der zur Bildung des Teilstromes abgezweigten Teilmenge, also einer Erhöhung des Volumenstromes des Teilstromes, ein pH-Niveau des Teilstromes bzw. der Behandlungsflüssigkeit weiter abgesenkt werden.

Es kann aber auch von Vorteil sein, wenn mittels wenigstens eines Durchflussmengenregulierungsmittels ein Teil der Behandlungsflüssigkeit aus dem wenigstens einen, abgezweigten Teilstrom entnommen, über die Ionenaustauschvorrichtung geführt, und anschließend wieder in den wenigstens einen Teilstrom zurückgeführt wird.

Hierdurch ist im Speziellen eine weitere Steuerungsmöglichkeit zur Beeinflussung der aus einem Teilstrom abgezogenen Menge an gelösten Ionen bereitgestellt. Außerdem kann durch diese Maßnahme auch ein pH-Wert des Teilstromes gezielt hinsichtlich eines gewünschten pH-Niveaus für den Teilstrom bzw. die Behandlungsflüssigkeit beeinflusst werden.

In weiterer Folge kann es auch zweckmäßig sein, wenn eine Durchflussmenge der Behandlungsflüssigkeit mittels jeweils eines Durchflussmengenregulierungsmittels für jeden Ionenaustauscher der Ionenaustauschvorrichtung separat geregelt wird.

Durch diese Maßnahme können die Steuerungsmöglichkeiten für die Ionenaustauschvorrichtung nochmalig weiter verbessert werden. Im Besonderen ist durch diese Maßnahme eine noch genauere Beeinflussung des pH-Wertes des Teilstromes hinsichtlich eines gewünschten Niveaus ermöglicht, da die Abgabe von solvatisierten H⁺-Ionen und/oder Hydroxyl-Ionen gezielt geregelt bzw. gesteuert werden kann.

Bei einer Weiterbildung des Verfahrens kann vorgesehen sein, dass der wenigstens eine Teilstrom vor dem Abziehen der gelösten Ionen zusätzlich durch eine Flüssigkeitsbehandlungsvorrichtung, umfassend Metallpartikeln oder ein Metallgeflecht aufweisend Kupfer und/oder Zink, geleitet wird.

Mittels einer derartigen Flüssigkeitsbehandlungsvorrichtung können spontane Oxidations-und oder Reduktionsreaktionen von bestimmten in der Behandlungsflüssigkeit gelösten Stoffen ausgelöst werden. Dies in Abhängigkeit der jeweiligen Standardpotentiale der gelösten Stoffe, im Vergleich zu den Standardpotentialen von Kupfer oder Zink bei jeweils gegebenen Parametern, etwa dem pH-Wert der Behandlungsflüssigkeit. Auf diese Weise können mit der verhältnismäßig einfachen und kostengünstigen Flüssigkeitsbehandlungsvorrichtung zum Beispiel im Vergleich zu Kupfer und/oder Zink edlere Metallkationen, beispielsweise Schwermetall-Ionen, Eisen-Ionen, etc. aus dem Teilstrom abgeschieden werden. Dies ist wiederum von Vorteil für die Effizienz der nachfolgenden Ionenaustauschvorrichtung, da die bereits mittels der Flüssigkeitsbehandlungsvorrichtung entfernten bzw. abgeschiedenen Ionen nicht mehr mittels der Ionenaustauschvorrichtung aus dem Teilstrom abgezogen werden müssen, bzw. hinsichtlich des Ionenaustausches nicht mit weiteren, gelösten Ionen in dem Teilstrom konkurrieren. Die nutzbare Ionenaustauschkapazität der Ionenaustauscher der Ionenaustauschvorrichtung steht somit vorteilhafterweise für das Abziehen bzw. Entfernen weiterer unerwünschter, mittels der Flüssigkeitsbehandlungsvorrichtung nicht entfernbarer gelöster Ionen, etwa für Aluminium-Ionen bzw. Ionen von Aluminiumverbindungen zur Verfügung. Hierdurch kann die Effizienz der Reinigung des Teilstromes nochmalig weiter verbessert werden. Des Weiteren können durch die spontanen Redox-Reaktionen in der Flüssigkeitsbehandlungsvorrichtung Stoffe in dem Teilstrom gebildet werden, welche ein Wachstum von Mikroorganismen hemmen können.

Es kann aber auch zweckmäßig sein, wenn nachfolgend auf das Abziehen gelöster Ionen zusätzlich gelöste Stoffe mittels einer Adsorptionsvorrichtung aus dem wenigstens einen Teilstrom abgezogen werden.

Zum Beispiel kann es von Vorteil sein, wenn die gelösten Stoffe mittels einem Aktivkohlefilter aus dem wenigstens einen Teilstrom abgezogen werden.

Durch diese Maßnahmen können zusätzlich zu den unerwünschten, gelösten Ionen auch weitere unerwünschte, insbesondere ungeladene bzw. nicht ionisch vorliegende Stoffe aus dem wenigstens einen Teilstrom entfernt werden.

Grundsätzlich kann eine Verfahrensführung sinnvoll sein, bei welcher die Lebensmittel in den Behältnissen in einer Behandlungszone erwärmt oder in mehreren Behandlungszonen sukzessive erwärmt werden, nachfolgend in einer Behandlungszone oder mehreren Behandlungszonen pasteurisiert werden, und darauf folgend in einer Behandlungszone abgekühlt oder in mehreren Behandlungszonen sukzessive abgekühlt werden.

Auf diese Weise kann eine für die Lebensmittel besonders schonendes Pasteurisierungsverfahren bereitgestellt werden, da großen Temperatursprünge durch die temperierte Behandlungsflüssigkeit vermieden werden können. Außerdem kann auf diese Weise eine gleichmäßigere Temperierung der Lebensmittel in einem jeweiligen Behältnis bereitgestellt werden.

Von Vorteil kann weiters eine Ausführungsvariante des Verfahrens sein, bei welcher bedarfsabhängig ein Teilvolumenstrom der Behandlungsflüssigkeit durch einen Wärmetauscher eines luftgekühlten Kühlturmes geleitet wird.

Auch durch diese Maßnahme kann die Reinigungseffizienz für die Behandlungsflüssigkeit weiter gesteigert werden. Dies vor allem deshalb, da ein Einbringen von Verunreinigungen in die Behandlungsflüssigkeit durch bzw. in dem luftgekühlten Kühlturm verhindert werden kann. Derartige luftgekühlte Kühltürme werden häufig zur Abkühlung eines Teiles der Behandlungsflüssigkeit benötigt, welche abgekühlte Behandlungsflüssigkeit beispielsweise wiederum zum Abkühlen von Behältnissen nach erfolgter Pasteurisierung eingesetzt werden kann. Aufgrund der meist erforderlichen, großen Kühlkapazität von Kühltürmen, kann ein Eintrag von Verunreinigungen bei konventionellen Kühltürmen ohne Wärmetauscher hierbei durchaus sehr groß sein.

Schließlich kann auch vorgesehen sein, dass mittels der Pasteurisierungsanlage zumindest zeitweilig bzw. temporär einen metallischen Werkstoff aufweisende Behältnisse, insbesondere einen Aluminiumwerkstoff aufweisende Behältnisse behandelt werden.

Hierdurch kann die Palette der mittels der Pasteurisierungsanlage behandelten Behältnisse weiter vergrößert werden. Im Besonderen können sehr dünnwandige Behältnisse behandelt werden, welche aufgrund der Eigenschaften von Aluminium bzw. Aluminiumlegierungen dennoch hervorragend zur Aufbewahrung bzw. Lagerung von haltbar gemachten Lebensmitteln geeignet sind. Einen Aluminiumwerkstoff aufweisende Behältnisse sind bei einer Behandlung zur Pasteurisierung in mehrerer Hinsicht herausfordernd. Zum einen können Aluminiumbestandteile im Zuge der Behandlung zur Pasteurisierung unerwünscht in die Behandlungsflüssigkeit gelangen, und gegebenenfalls von der Behandlungsflüssigkeit aufgelöst werden. Des Weiteren sind einen Aluminiumwerkstoff aufweisende Behältnisse besonders anfällig für oberflächliche chemische und/oder physikalische Veränderungen, welche durch die Behandlungsflüssigkeit selbst verursacht werden können. Dies betrifft zum Beispiel die bereits erwähnte Brunnenwasserschwärze. Aluminiumwerkstoffe kommen beispielsweise häufig bei Verschlüssen von Behältnissen vor. Zahlreiche Behältnisse bestehen aber auch hauptsächlich aus einem Aluminiumwerkstoff, etwa Dosen zur Aufnahme von lange haltbaren Lebensmitteln, oder beispielsweise Getränkedosen.

Die Aufgabe der Erfindung wird aber auch durch Bereitstellen einer, zur Durchführung des beschriebenen Verfahrens geeigneten Pasteurisierungsanlage für in verschlossenen Behältnissen abgefüllte Lebensmittel gelöst.

Die Pasteurisierungsanlage umfasst eine oder mehrere Behandlungszone(n) mit Zuführmittel(n) zur Applikation einer temperierten Behandlungsflüssigkeit auf eine Außenseite der Behältnisse, und
eine Transportvorrichtung zum Transport der Behältnisse durch die Behandlungszone(n). Außerdem umfasst die Pasteurisierungsanlage mindestens einen Umlaufkreislauf zum Ableiten der Behandlungsflüssigkeit aus der oder den Behandlungszone(n) und zur Rückführung der abgeleiteten Behandlungsflüssigkeit in eine Behandlungszone bzw. in eine der Behandlungszonen.

Es ist wenigstens eine Reinigungsvorrichtung vorgesehen, welche wenigstens eine Reinigungsvorrichtung mit einem Entnahmemittel zur Entnahme eines Teilstromes der Behandlungsflüssigkeit aus dem mindestens einen Umlaufkreislauf leitungsverbunden ist, und welche wenigstens eine Reinigungsvorrichtung mit einem Rückführmittel zur Rückführung des Teilstromes in einen Umlaufkreislauf oder eine Behandlungszone strömungstechnisch leitungsverbunden ist. Die wenigstens eine Reinigungsvorrichtung umfasst eine Membranfiltrationsvorrichtung zur Filtrierung des entnommenen Teilstromes. Des Weiteren umfasst die wenigstens eine Reinigungsvorrichtung strömungstechnisch folgend auf die Membranfiltrationsvorrichtung eine Ionenaustauschvorrichtung, aufweisend mindestens einen, stark sauren Kationenaustauscher.

Zur Hindurchführung eines entnommenen Teilstromes durch die Membranfiltrationsvorrichtung und die Ionenaustauschvorrichtung umfasst die wenigstens eine Reinigungsvorrichtung Führungsmittel. Die wenigstens eine Reinigungsvorrichtung kann bevorzugt wahlweise absperrbar oder durchströmbar gegenüber dem Umlaufkreislauf ausgeführt sein, zum Beispiel via mindestens ein Absperrorgan. Die Membranfiltrationsvorrichtung kann zum Beispiel ein oder mehrere Filtermodule bzw. Filtereinheiten umfassen, welche im Betrieb der Pasteurisierungsanlage zur Hindurchführung eines entnommenen bzw. abgezweigten Teilstromes, oder Teilen eines abgezweigten Teilstromes vorgesehen sind.

Durch die angegebenen Merkmale kann eine Pasteurisierungsanlage für in verschlossenen Behältnisse abgefüllte Lebensmittel bereitgestellt werden, bei welcher ein möglichst großer Anteil der wässrigen Behandlungsflüssigkeit dauerhaft wiederverwendet werden kann. Vor allem sind durch die angegebenen Merkmale Mittel zur effizienten Reinigung der in einem Umlaufkreislauf oder mehreren Umlaufkreisläufen geführten Behandlungsflüssigkeit ausgebildet. Die Membranfiltrationsanlage(n) erlauben hierbei ein effizientes Entfernen von koagulierten bzw. partikulären Stoffen aus der Behandlungsflüssigkeit. Mittels der Ionenaustauschvorrichtung(en) können unerwünschte, gelöste Ionen, wie etwa solvatisierte Aluminium-Ionen oder ionisch vorliegende Aluminiumverbindungen aus der Behandlungsflüssigkeit abgezogen bzw. entfernt werden. Hierbei kann durch die der Ionenaustauschvorrichtung strömungstechnisch vorangeordnete Membranfiltrationsvorrichtung in synergistischer Weise auch ein Verblocken der Ionenaustauschvorrichtung durch partikuläre Stoffe wirksam hintangehalten werden. Außerdem können aufgrund der angegebenen Merkmale im Betrieb der Pasteurisierungsanlage weitere Mittel zur Reinigung der Behandlungsflüssigkeit, wie etwa Sedimentationsvorrichtungen oder Filteranlagen zur Abtrennung großer Partikel, gegebenenfalls erübrigt werden.

Die wenigstens eine Reinigungsvorrichtung ist strömungstechnisch über ein Entnahmemittel mit einem Umlaufkreislauf leitungsverbunden. Ein Entnahmemittel kann im Prinzip ein einfaches Verteilungselement, beispielsweise ein T-Stück aufweisen, welches ein Abzweigen eines Teilstromes aus einem Umlaufkreislauf ermöglicht. Daran anschließend können Führungselemente, etwa Rohrleitungen, zur Hindurchführung eines aus einem Umlaufkreislauf abgezweigten Teilstromes der Behandlungsflüssigkeit durch die wenigstens eine Reinigungsvorrichtung, also durch die Membranfiltrationsvorrichtung und folgend durch die Ionenaustauschvorrichtung, vorgesehen sein. Ein abgezweigter und gereinigter Teilstrom kann sodann über ein Rückführmittel, etwa eine Rohrleitung, wieder in einen Umlaufkreislauf oder eine Behandlungszone zugeführt werden. Weitere, vorteilhafte Elemente, insbesondere Steuerungsmittel zur Regelung der Menge an entnommener Behandlungsflüssigkeit aus einem Umlaufkreislauf, werden noch näher erläutert. Grundsätzlich können auch mehrere Reinigungsvorrichtungen jeweils über ein Entnahmemittel jeweils mit einem Umlaufkreislauf bzw. einem der Umlaufkreisläufe der Pasteurisierungsanlage, strömungstechnisch leitungsverbunden sein.

Durch den Einsatz mindestens eines, stark sauren Kationenaustauschers können im Betrieb der Pasteurisierungsanlage zudem im Speziellen Metallkationen effizient aus einem abgezweigten Teilstrom der Behandlungsflüssigkeit entfernt werden, ohne durch andere Metallkationen ersetzt zu werden. Stattdessen können entfernte Kationen bzw. Metallkationen durch solvatisierte H⁺-Ionen ersetzt werden. Ein stark saurer Kationenaustauscher kann zum Beispiel eine Ionenaustauschermatrix bzw. ein Ionenaustauscherharz mit Sulfonsäuregruppen als aktive Gruppen umfassen. Darüber hinaus ist durch den mindestens einen, stark sauren Kationenaustauscher der Ionenaustauschvorrichtung auch eine Beeinflussung ein pH-Wert des Teilstromes hinsichtlich eines gewünschten pH-Niveaus eines abgezweigten Teilstromes ermöglicht. Von Vorteil ist hierbei, dass ein Einsatz an pH-Wert-Regulationschemikalien, wie Säuren oder Basen, zur Beeinflussung des pH-Wertes der Behandlungsflüssigkeit zumindest deutlich reduziert werden kann.

Weitere durch die angegebenen Merkmale der Pasteurisierungsanlage erzielbare Vorteile wurden bereits in der Beschreibung des Verfahrens zum Betreiben der Anlage angeführt. Eine nochmalige Beschreibung wird an dieser Stelle daher erübrigt.

Des Weiteren kann vorgesehen sein, dass die Ionenaustauschvorrichtung mindestens einen stark basischen Anionenaustauscher umfasst.

Durch dieses Merkmal können im Betrieb der Pasteurisierungsanlage auch unerwünschte Anionen aus einem abgezweigten Teilstrom der Behandlungsflüssigkeit abgezogen bzw. entfernt werden. Zusätzlich kann auch mittels des mindestens einen, stark basischen Anionenaustauschers ein pH-Wert des abgezweigten Teilstromes hinsichtlich eines gewünschten pH-Niveaus beeinflusst werden. Ein stark basischer Anionenaustauscher kann zum Beispiel eine Ionenaustauschermatrix bzw. ein Ionenaustauscherharz mit quartären Ammoniumgruppen als aktive Gruppen umfassen.

Bei einer vorteilhaften Weiterbildung kann vorgesehen sein, dass die Ionenaustauschvorrichtung mit mindestens einem Regenerierungsmittel zur Regenerierung des oder der Ionenaustauschers) strömungstechnisch leitungsverbunden ist.

Hierdurch kann sowohl der mindestens eine, stark saure Kationenaustauscher als auch der mindestens eine, stark basische Anionenaustauscher bedarfsabhängig regeneriert werden, jeweils um ausreichende, nutzbare Ionenaustauschkapazität bereitzustellen, bzw. auch um eine jeweilige Beeinflussung des pH-Wertes eines abgezweigten Teilstromes hinsichtlich eines gewünschten pH-Niveaus mittels der Ionenaustauschvorrichtung durchführen zu können.

Bei einer weiteren Ausgestaltungsform kann von Vorteil sein, dass strömungstechnisch vor und nach der Ionenaustauschvorrichtung jeweils ein Sensormittel zur Überwachung eines Gehalts an gelösten Ionen in dem Teilstrom angeordnet ist.

Auf diese Weise kann einerseits der Ionenaustauschvorgang überwacht werden. Mittels sensorischer Überwachung des Gehaltes gelöster Ionen in dem Teilstrom kann aber auch die Reinheit bzw. Qualität der wässrigen Behandlungsflüssigkeit grundsätzlich überwacht werden. Zur Überwachung des Gehalts an Ionen können beispielsweise strömungstechnisch jeweils vor und nach der Ionenaustauschvorrichtung Leitfähigkeitssensoren angeordnet sein.

Bei einer bevorzugten Ausbildungsform kann vorgesehen sein, dass strömungstechnisch vor und nach der Ionenaustauschvorrichtung jeweils ein pH-Wert-Sensor angeordnet ist.

Mittels dieser pH-Wert-Messsensoren kann im Betrieb der Pasteurisierungsanlage eine durch die Ionenaustauschvorrichtung verursachte Änderung des pH-Wertes eines abgezweigten Teilstromes der Behandlungsflüssigkeit erfasst werden. Von Vorteil ist hierbei, dass in weiterer Folge aufgrund der Überwachung des pH-Wertes auch auf die Reinheit bzw. den Gehalt an in der Behandlungsflüssigkeit gelösten Ionen rückgeschlossen werden kann.

In weiterer Folge kann auch eine Ausgestaltungsform der Pasteurisierungsanlage zweckmäßig sein, bei welcher ein Verhältnis einer Ionenaustauschtotalkapazität aller vorhandenen, stark sauren Kationenaustauscher zu einer Ionenaustauschtotalkapazität aller vorhandener, stark basischen Anionenaustauscher bedarfsabhängig hinsichtlich eines gewünschten pH-Wertes der Behandlungsflüssigkeit gewählt ist.

Hierdurch kann ein im Betrieb der Pasteurisierungsanlage, wirksames Mittel zur Beeinflussung des pH-Wertes eines abgezweigten Teilstrom hinsichtlich eines jeweils gewünschten pH-Niveaus bereitgestellt werden. In weiterer Folge kann aufgrund der Beeinflussung des pH-Wertes mittels der Ionenaustauschvorrichtung vorteilhafterweise zumindest die Menge an chemischen pH-Regulierungsmittel deutlich reduziert werden. In der Praxis hat sich gezeigt, dass ein geringfügig saures Niveau der Behandlungsflüssigkeit, beispielsweise ein durchschnittlicher pH-Wert zwischen 4 und 7, vorteilhaft für die Behandlung der Außenseite der Behältnisse sein kann. Dies kann zum Beispiel von Vorteil sein, um die Bildung der sogenannten Brunnenwasserschwärze an Aluminiumwerkstoffen an den behandelten Behältnissen hintanzuhalten. Dementsprechend kann die Ionenaustauschtotalkapazität aller vorhandenen, stark sauren Kationenaustauscher größer gewählt sein, als die Ionenaustauschtotalkapazität aller vorhandener, stark basischen Anionenaustauscher.

Bei einer Weiterbildung der Pasteurisierungsanlage kann vorgesehen sein, dass der wenigstens einen Reinigungsvorrichtung eine Durchflussmengenregulierungsvorrichtung zugeordnet ist.

Durch dieses bauliche Merkmal kann für den Betrieb der Pasteurisierungsanlage ein Mittel zur gezielten Regelung einer Entnahme einer Teilmenge aus einem in einem Umlaufkreislauf geführten Volumenstromes der Behandlungsflüssigkeit bereitgestellt werden. Hierdurch kann die jeweils abgezweigte, zumindest eine Teilmenge an Behandlungsflüssigkeit zum Beispiel einem jeweiligen Verunreinigungsgrad der Behandlungsflüssigkeit entsprechend angepasst werden. Dies sowohl betreffend filtrierbare, partikuläre bzw. koagulierte Stoffe, als auch unerwünschte, gelöste Ionen in der Behandlungsflüssigkeit. Des Weiteren ist hierdurch auch eine Steuerungsmöglichkeit geschaffen, um einen pH-Wert des Teilstromes bzw. damit auch der Behandlungsflüssigkeit in Richtung eines jeweils gewünschten Niveaus zu beeinflussen. Dies in Zusammenhang mit einem Verhältnis von jeweils einer nutzbaren Ionenaustauschkapazität der vorhandenen, stark sauren Kationenaustauscher und stark basischen Anionenaustauscher. Die Durchflussmengenregulierungsvorrichtung kann zum Beispiel ein strömungstechnisches Durchflussregelorgan, beispielsweise ein stufenlos oder stufig verstellbares Durchflussventil umfassen.

Es kann aber auch eine Weiterbildung zweckmäßig sein, bei welcher die Ionenaustauschvorrichtung über ein wenigstens ein Durchflussmengenregulierungsmittel strömungstechnisch parallel zu einer Durchflussleitung für den Teilstrom in der wenigstens einen Reinigungsvorrichtung angeordnet ist.

Hierdurch ist für den Betrieb der Pasteurisierungsanlage eine weitere Steuerungsmöglichkeit, im Speziellen zur Beeinflussung der aus einem Teilstrom abgezogenen Menge an gelösten Ionen, bereitgestellt. Des Weiteren kann im Betrieb durch dieses Mittel ein pH-Wert des Teilstromes gezielt hinsichtlich eines gewünschten pH-Niveaus für den Teilstrom bzw. die Behandlungsflüssigkeit beeinflusst werden. Das Durchflussmengenregulierungsmittel kann wiederum zum Beispiel durch ein manuell oder automatisiert gesteuertes, strömungstechnisches Durchflussregelorgan gebildet sein.

In weiterer Folge kann aber auch vorgesehen sein, dass jedem Ionenaustauscher der Ionenaustauschvorrichtung ein Durchflussregulierungsmittel zugeordnet ist.

Hierdurch kann die Durchflussmenge durch jeden Ionenaustauscher der Ionenaustauschvorrichtung jeweils separat gesteuert bzw. geregelt werden. Im Besonderen ist durch dieses Merkmal ein Mittel zur noch genaueren Beeinflussung des pH-Wertes des Teilstromes hinsichtlich eines gewünschten Niveaus bereitgestellt, da im Betrieb der Pasteurisierungsanlage die Abgabe von solvatisierten H⁺-Ionen und/oder Hydroxyl-Ionen gezielt und effizient geregelt bzw. gesteuert werden kann.

Außerdem kann eine Ausgestaltungsform der Pasteurisierungsanlage von Vorteil sein, bei welcher die wenigstens eine Reinigungsvorrichtung eine weitere Flüssigkeitsbehandlungsvorrichtung mit Metallpartikeln oder einem Metallgeflecht aufweisend Kupfer und/oder Zink, umfasst, welche Flüssigkeitsbehandlungsvorrichtung strömungstechnisch zwischen der Membranfiltrationsvorrichtung und der Ionenaustauschvorrichtung angeordnet ist.

Mittels einer derartigen Flüssigkeitsbehandlungsvorrichtung können im Betrieb der Pasteurisierungsanlage spontane Oxidations- und oder Reduktionsreaktionen von bestimmten in der Behandlungsflüssigkeit gelösten Stoffen ausgelöst werden. Hierdurch können zum Beispiel im Vergleich zu Kupfer und/oder Zink edlere Metallkationen, beispielsweise SchwermetallIonen, Eisen-Ionen, etc. aus einem entnommenen Teilstrom abgeschieden werden. Dies ist wiederum von Vorteil für die Effizienz der nachfolgenden Ionenaustauschvorrichtung, da die bereits mittels der Flüssigkeitsbehandlungsvorrichtung entfernbaren bzw. abgeschiedenen Ionen nicht mehr mittels der Ionenaustauschvorrichtung aus dem Teilstrom abgezogen werden müssen, bzw. hinsichtlich des Ionenaustausches nicht mit weiteren, gelösten Ionen in dem Teilstrom konkurrieren. Die nutzbare Ionenaustauschkapazität der Ionenaustauscher der Ionenaustauschvorrichtung steht somit vorteilhafterweise für das Abziehen bzw. Entfernen weiterer unerwünschter, mittels der Flüssigkeitsbehandlungsvorrichtung nicht entfernbarer gelöster Ionen, etwa für Aluminium-Ionen bzw. Ionen von Aluminiumverbindungen zur Verfügung.

Des Weiteren kann vorgesehen sein, dass die wenigstens eine Reinigungsvorrichtung eine Adsorptionsvorrichtung umfasst, welche Adsorptionsvorrichtung strömungstechnisch nach der Ionenaustauschvorrichtung angeordnet ist.

In weiterer Folge kann auch vorgesehen sein, dass die Adsorptionsvorrichtung einen Aktivkohlefilter aufweist.

Hierdurch sind Mittel bereitgestellt, mittels welchen zusätzlich zu den unerwünschten, gelösten Ionen auch weitere unerwünschte, insbesondere ungeladene bzw. nicht ionisch vorliegende Stoffe aus einem abgezweigten bzw. aus einem Umlaufkreislauf entnommenen Teilstrom der Behandlungsflüssigkeit entfernt werden können.

Zur weiteren Verbesserung der Pasteurisierungsanlage kann schließlich auch vorgesehen sein, dass sie einen luftgekühlten Kühlturm umfasst, welcher einen gegenüber zur Führung der Behandlungsflüssigkeit vorgesehenen Leitungselementen, wahlweise absperrbaren oder wahlweise von Behandlungsflüssigkeit durchströmbaren Wärmetauscher umfasst.

Auch durch dieses Merkmal kann die Reinigungseffizienz für die Behandlungsflüssigkeit weiter gesteigert werden. Dies vor allem deshalb, da im Betrieb der Pasteurisierungsanlage ein Einbringen von Verunreinigungen in die Behandlungsflüssigkeit durch bzw. in dem luftgekühlten Kühlturm verhindert werden kann. Derartige luftgekühlte Kühltürme werden bei Pasteurisierungsanlagen häufig zur Abkühlung eines Teiles der Behandlungsflüssigkeit benötigt, welche abgekühlte Behandlungsflüssigkeit beispielsweise wiederum zum Abkühlen von Behältnissen nach erfolgter Pasteurisierung eingesetzt werden kann. Aufgrund der hierbei meist erforderlichen, großen Kühlkapazität derartiger Kühltürme, kann ein Eintrag von Verunreinigungen bei konventionellen Kühltürmen ohne Wärmetauscher durchaus sehr groß sein.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung eines Ausführungsbeispiels einer Pasteurisierungsanlage;
- Fig. 2: eine schematische Darstellung eines Ausführungsbeispiels einer Reinigungsvorrichtung der Pasteurisierungsanlage;
- Fig. 3: ausschnittsweise eine schematische Darstellung eines weiteren Ausführungsbeispiels der Pasteurisierungsanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

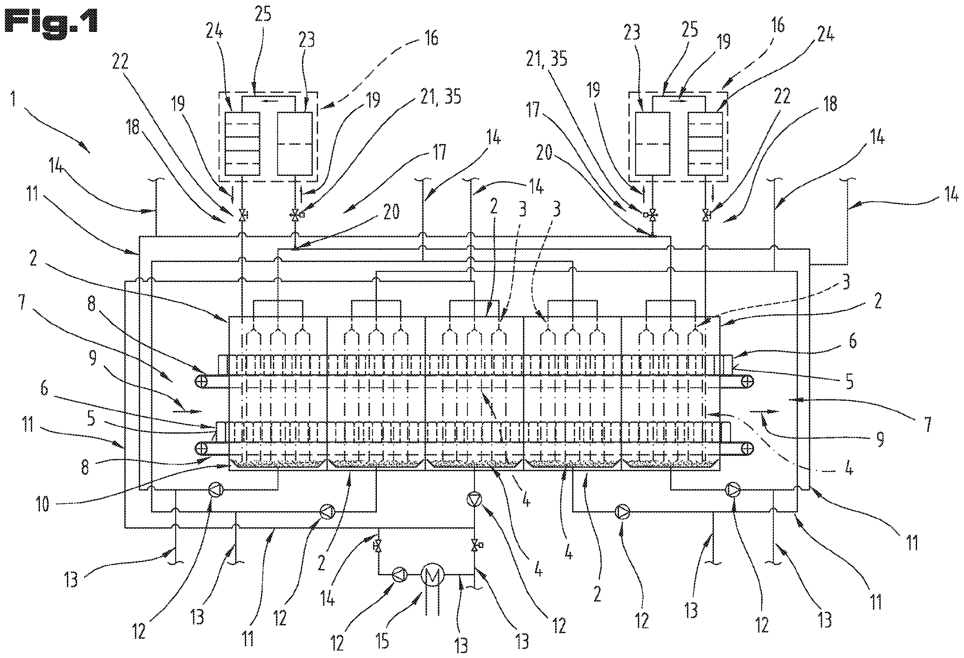

In der Fig. 1 ist ein Ausführungsbeispiel für eine Pasteurisierungsanlage 1 schematisch dargestellt. Die Pasteurisierungsanlage 1 umfasst eine oder mehrere Behandlungszone(n) 2 mit Zuführmittel(n) 3 zur Applikation einer Behandlungsflüssigkeit 4 auf eine Außenseite 5 von Behältnissen 6. In dem Ausführungsbeispiel gemäß der Fig. 1 sind beispielhaft 5 Behandlungszonen 2 dargestellt, wobei es sich von selbst versteht, dass je nach Anforderung und Auslegung einer Pasteurisierungsanlage 1 auch mehr oder weniger Behandlungszone(n) 2 vorgesehen sein können.

Im Betrieb der Pasteurisierungsanlage 1 wird eine Pasteurisierung von Lebensmitteln derart durchgeführt, dass die Lebensmittel vorab in die Behältnisse 6 gefüllt werden, und die Behältnisse 6 verschlossen werden. Ein Behandeln der mit Lebensmitteln befüllten und verschlossenen Behältnisse 6 wird in einer jeweiligen Behandlungszone 2 durch Applizieren einer wässrigen Behandlungsflüssigkeit 4 auf eine Außenseite 5 der Behältnisse 6 via das oder die Zuführmittel 3 durchgeführt. Das oder die Zuführmittel 3 einer jeweiligen Behandlungszone 2 können zum Beispiel durch sprinkler- oder düsenartige Berieselungsmittel bzw. allgemein durch Mittel zum Verteilen der Behandlungsflüssigkeit in einer jeweiligen Behandlungszone 2 gebildet sein. Die temperierte, wässrige Behandlungsflüssigkeit 4 wird auf diese Weise auf die Außenseite 5 der Behältnisse 6 appliziert, wodurch die Behältnisse 6 und somit die in den Behältnissen 6 abgefüllten Lebensmittel gezielt temperiert und pasteurisiert werden können. Grundsätzlich kann hierbei vorgesehen sein, dass mittels der Pasteurisierungsanlage 1 zumindest zeitweilig einen metallischen Werkstoff aufweisende Behältnisse 6, insbesondere einen Aluminiumwerkstoff aufweisende Behältnisse 6 behandelt werden.

Zum Transportieren der Behältnisse 6 durch die Behandlungszone(n) 2 ist eine Transportvorrichtung 7 vorgesehen. Bei dem in der Fig. 1 dargestellten Ausführungsbeispiel umfasst die Transportvorrichtung 7 zwei angetriebene Förderbänder 8, womit die mit Lebensmitteln befüllten und verschlossenen Behältnisse 6 im Betrieb der Pasteurisierungsanlage 1 in zwei Ebenen durch die Behandlungszone(n) 2 transportiert werden. Dies kann in einer, in der Fig.1 mit den Pfeilen veranschaulichten, Transportrichtung 9 zum Beispiel von links nach rechts erfolgen.

Im Betrieb der Pasteurisierungsanlage 1 kann zum Beispiel vorgesehen sein, dass die Lebensmittel in den Behältnissen 6 in einer Behandlungszone 2 oder mehreren Behandlungszonen 2 zunächst erwärmt werden. Ein sukzessives Erwärmen der Lebensmittel bzw. der Behältnisse 6 kann bei dem in der Fig. 1 dargestellten Ausführungsbeispiel zum Beispiel in den beiden links dargestellten Behandlungszonen 2 erfolgen. Nachfolgend auf die Erwärmung können die Lebensmittel in einer Behandlungszone 2 oder mehreren Behandlungszonen 2 pasteurisiert werden, beispielsweise durch Zuführen einer zur Pasteurisierung geeignet temperierten Behandlungsflüssigkeit 4 in die mittig in der Fig. 1 dargestellten Behandlungszone 2. Darauf folgend können die Lebensmittel bzw. die Behältnisse 6 wiederum in einer Behandlungszone 2 oder mehreren Behandlungszonen 2 abgekühlt werden. Ein sukzessives Abkühlen durch Zufuhr einer Behandlungsflüssigkeit 4 mit jeweils zum Abkühlen der Behältnisse 6 geeigneter Temperatur, kann zum Beispiel in den beiden rechts in der Fig. 1 dargestellten Behandlungszonen 2 erfolgen.

Es kann also zum Beispiel vorgesehen sein, dass die Lebensmittel in der in Transportrichtung 9 zuerst angeordneten Behandlungszone 2 erwärmt, und in der in Transportrichtung 9 folgenden Behandlungszone 2 weiter erwärmt werden. In der in Transportrichtung 9 folgenden Behandlungszone 2 können die Lebensmittel sodann durch Applikation einer Behandlungsflüssigkeit 4 mit besonders hohem Temperaturniveau, beispielsweise zwischen 70 °C und 110 °C, auf die Außenseite 5 der Behältnisse 6 pasteurisiert werden. In den darauf in Transportrichtung 9 folgenden, beiden Behandlungszonen 2 können die Lebensmittel bzw. die Behältnisse 6 sodann mittels einer entsprechend temperierten, kühleren Behandlungsflüssigkeit 4 wieder gezielt abgekühlt werden. Dies ist vor allem deshalb von Vorteil, da hierdurch eine möglichst schonende Pasteurisierung der Lebensmittel vorgenommen werden kann, insbesondere ohne die Lebensmittel hierbei durch die Temperierung selbst zu schädigen.

Nach Applikation der temperierten Behandlungsflüssigkeit 4 auf die Außenseite 5 der Behältnisse 6 in der oder den Behandlungszone(n) 2, kann die Behandlungsflüssigkeit in einem unteren Bodenbereich 10 einer jeweiligen Behandlungszone 2 gesammelt, und wieder aus einer jeweiligen Behandlungszone 2 abgeführt werden. Zum Ableiten der Behandlungsflüssigkeit 4 aus der oder den Behandlungszone(n) 2 und zur Rückführung der abgeleiteten Behandlungsflüssigkeit 4 in eine Behandlungszone 2 bzw. eine der Behandlungszonen 2, umfasst die Pasteurisierungsanlage 1 mindestens einen Umlaufkreislauf 11. Im Betrieb der Pasteurisierungsanlage 1 wird hierbei die Behandlungsflüssigkeit 4 aus der oder den Behandlungszone(n) 2 zur Wiederverwendung in diesem mindestens einen Umlaufkreislauf 11 wieder in eine Behandlungszone 2 zurückgeführt.

Wie anhand des in der Fig. 1 dargestellten Ausführungsbeispiels veranschaulicht ist, kann zum Beispiel vorgesehen sein, dass die Behandlungsflüssigkeit 4 über einen Umlaufkreislauf 11 aus einer Behandlungszone 2 abgeführt wird, und einer anderen Behandlungszone 2 zugeführt wird. Bei dem dargestellten Ausführungsbeispiel kann beispielsweise die Behandlungsflüssigkeit 4 aus der äußerst links dargestellten Behandlungszone 2 über einen Umlaufkreislauf 11 der äußerst rechts dargestellten Behandlungszone 2 zugeführt werden. Umgekehrt kann beispielsweise die Behandlungsflüssigkeit 4 aus der äußerst rechts dargestellten Behandlungszone 2 über einen Umlaufkreislauf 11 der äußerst links dargestellten Behandlungszone 2 zum Aufwärmen der Behältnisse 6 bzw. Lebensmittel zugeführt werden. Dies kann vor allem deshalb zweckmäßig sein, da die Behandlungsflüssigkeit 4 während der Applikation bzw. dem Einwirken auf die Behältnisse 6 entsprechend abkühlt oder erwärmt wird. Durch dieses Abkühlen bzw. Erwärmen kann die Behandlungsflüssigkeit 4 aus einer jeweiligen Behandlungszone 2 folglich ein für eine andere Behandlungszone 2 günstiges Temperaturniveau aufweisen. Andererseits kann es aber auch zweckmäßig sein, wenn die Behandlungsflüssigkeit 4 aus einer Behandlungszone 2 über einen Umlaufkreislauf 11 wieder in die selbe Behandlungszone 2 zurückgeführt wird, wie die anhand der in der Fig. 1 mittig dargestellten Behandlungszone 2, welche zum Pasteurisieren der Lebensmittel vorgesehen ist, veranschaulicht ist.

Zur Förderung bzw. Führung von jeweiligen Volumenströmen der Behandlungsflüssigkeit 4 in dem Umlaufkreislauf 11 oder in den Umlaufkreisläufen 11 können jeweils Fördermittel 12, beispielsweise Pumpen vorgesehen sein, wie dies in der Fig. 1 dargestellt ist. Des Weiteren kann auch vorgesehen sein, dass die Pasteurisierungsanlage 1 Mittel 13 zum Ableiten von Teilen der Behandlungsflüssigkeit 4 aus dem Umlaufkreislauf 11 bzw. aus den Umlaufkreisläufen 11 aufweist, beispielsweise zur Probennahme, sowie Mittel 14 zum Zuleiten von Stoffen, wie etwa frischer Behandlungsflüssigkeit 4, beispielsweise Frischwasser, oder von Chemikalien, etc. umfasst. Solche Mittel 13, 14 können zum Beispiel durch Rohrleitungen gebildet sein, welche zum Zu- und Abführen von Behandlungsflüssigkeit 4 in bzw. aus Sammelbecken etc. angeordnet sind, oder welche Mittel 13, 14 zwecks Temperierung von Behandlungsflüssigkeit mit Heiz- und/oder Kühlvorrichtungen strömungstechnisch leitungsverbunden sind. Als Beispiel ist in der Fig. 1 eine Heizvorrichtung 15, beispielsweise ein Dampferhitzer oder eine Wärmepumpe veranschaulicht, welche Heizvorrichtung 15 über Mittel 13, 14 mit dem Umlaufkreislauf 11 zur Rückführung von Behandlungsflüssigkeit 4 in die mittig dargestellte Behandlungszone 2 strömungstechnisch leitungsverbunden ist. Auf diese Weise kann die Behandlungsflüssigkeit für diesen Umlaufkreislauf 11 auf das für eine Pasteurisierung der Lebensmittel jeweils erforderliche Temperaturniveau erwärmt werden.

Durch die fortwährende Führung der Behandlungsflüssigkeit 4 über den Umlaufkreislauf 11 oder die Umlaufkreisläufe 11, bzw. die fortwährende Wiederverwendung der Behandlungsflüssigkeit 4 im Betrieb der Pasteurisierungsanlage 1, werden mit der Zeit Verunreinigungen bzw. unerwünschte Stoffe in die wässrige Behandlungsflüssigkeit eingetragen. Zur fortwährenden Entfernung dieser unerwünschten Stoffe bzw. Verunreinigungen aus der Behandlungsflüssigkeit 4 ist wenigstens eine Reinigungsvorrichtung 16 vorgesehen. Die wenigstens eine Reinigungsvorrichtung 16 ist mit einem Entnahmemittel 17 zur Entnahme eines Teilstromes 19 der Behandlungsflüssigkeit 4 aus dem mindestens einen Umlaufkreislauf 11 strömungstechnisch leitungsverbunden. Des Weiteren ist die wenigstens eine Reinigungsvorrichtung 16 mit einem Rückführmittel 18 zur Rückführung des entnommenen Teilstromes 19 in einen Umlaufkreislauf 11 oder eine Behandlungszone 2strömungstechnisch leitungsverbunden. Hierdurch kann im Betrieb der Pasteurisierungsanlage 1 eine Teilmenge eines pro Zeiteinheit über den mindestens Umlaufkreislauf 11 geführten Volumenstromes der Behandlungsflüssigkeit 4 zur Bildung wenigstens eines Teilstromes 19 abgezweigt werden, wie dies durch die Pfeile in der Fig. 1 veranschaulicht ist.

In dem in der Fig. 1 dargestellten Ausführungsbeispiel, sind als Beispiel zwei Reinigungsvorrichtungen 16 dargestellt, welche Reinigungsvorrichtungen 16 jeweils mit unterschiedlichen Umlaufkreisläufen 11 strömungstechnisch leitungsverbunden sind. Selbstverständlich kann auch nur eine Reinigungsvorrichtung 16 vorgesehen sein, oder kann eine Pasteurisierungsanlage 1 auch mehr als zwei Reinigungsvorrichtungen 16 umfassen. Die Anzahl und auch die Reinigungskapazität von Reinigungsvorrichtung(en) 16 kann hierbei jeweils unter anderem unter Berücksichtigung der Größe bzw. der Behandlungskapazität einer jeweiligen Pasteurisierungsanlage 1 gewählt bzw. festgelegt werden. Außerdem kann durchaus auch vorgesehen sein, dass mehrere Reinigungsvorrichtungen 16 über Entnahmemittel 17 mit einem Umlaufkreislauf 11 bzw. einem der Umlaufkreisläufe 11 strömungstechnisch leitungsverbunden sind.

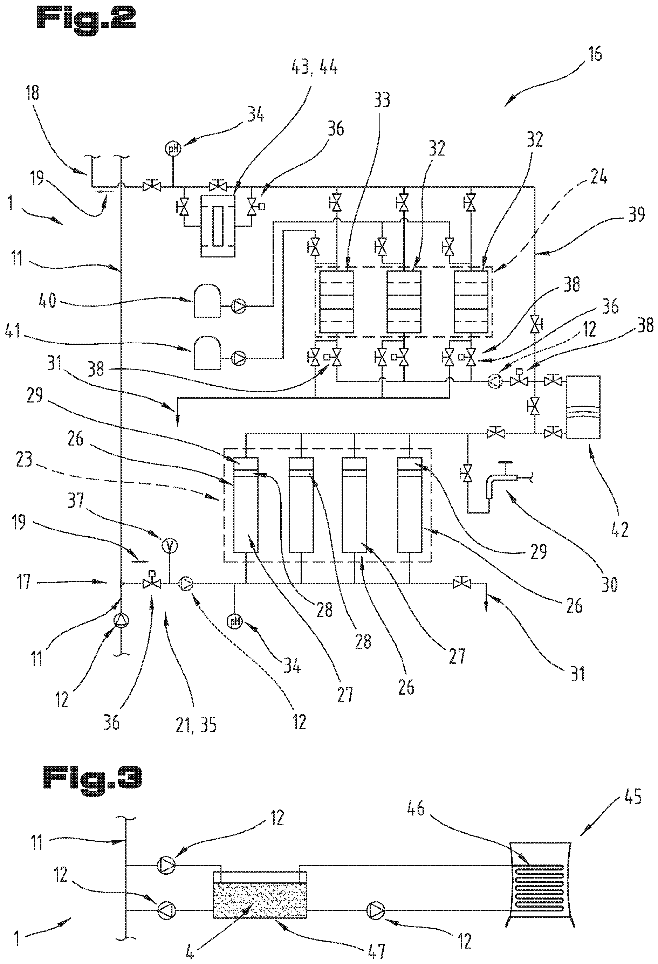

Ein Entnahmemittel 17 kann im Prinzip ein einfaches Verteilungselement, beispielsweise ein T-Stück 20 aufweisen, welches ein Abzweigen eines Teilstromes 19 aus einem Umlaufkreislauf 11 ermöglicht, wie dies schematisch in der Fig. 1 veranschaulicht ist. Ein Rückführmittel 18 kann zum Beispiel eine Rohrleitung umfassen, über welche ein gereinigter Teilstrom 19, einer Behandlungszone 2 zugeführt werden kann, wie dies beispielhaft in der Fig. 1 veranschaulicht ist. Unter Berücksichtigung bzw. Ausgleichen des Druckverlustes über die wenigstens eine Reinigungsvorrichtung 16, kann eine Rückführung des Teilstromes 19 alternativ zu dem in der Fig. 1 dargestellten Ausführungsbeispiel, auch in eine Rohrleitung eines Umlaufkreislaufes 11 erfolgen, beispielsweise via ein weiteres T-Stück. Des Weiteren können weitere Elemente, wie etwa Steuerungsmittel 21 und/oder Absperrmittel 22 vorgesehen sein, um zum Beispiel eine zur Bildung eines Teilstromes 19 abgezweigte bzw. aus einem Volumenstrom in einem Umlaufkreislauf 11 entnommene Teilmenge an Behandlungsflüssigkeit 4 beeinflussen bzw. regeln zu können, und/oder um eine Reinigungsvorrichtung 16 gegenüber einem Umlaufkreislauf bedarfsabhängig absperren zu können. Beispiele für solche, weitere Elemente werden anhand der Fig. 2 noch näher erläutert.

Wie weiters in der Fig. 1 dargestellt ist, umfasst die wenigstens eine Reinigungsvorrichtung 16 eine Membranfiltrationsvorrichtung 23 zur Filtrierung des entnommenen Teilstromes 19. Außerdem umfasst die wenigstens eine Reinigungsvorrichtung 16 strömungstechnisch folgend auf die Membranfiltrationsvorrichtung 23 eine Ionenaustauschvorrichtung 24, welche Ionenaustauschvorrichtung 24 mindestens einen stark sauren Kationenaustauscher aufweist. Zur Hindurchführung des wenigstens einen, abgezweigten bzw. entnommenen Teilstromes 19 durch die wenigstens eine Reinigungsvorrichtung 16 sind Führungsmittel 25 angeordnet.

Hierdurch kann im Betrieb der Pasteurisierungsanlage 1, der wenigstens eine, aus einem Umlaufkreislauf 11 entnommene bzw. abgezweigte Teilstrom 19 mittels einer Membranfiltrationsvorrichtung 23 filtriert werden, und folgend aus dem wenigstens einen Teilstrom 19 mittels einer Ionenaustauschvorrichtung 24, aufweisend mindestens einen, stark sauren Kationenaustauscher, gelöste Ionen abgezogen werden. Anschließend kann der derart gereinigte, wenigstens eine Teilstrom 19 über ein Rückführmittel 18 wieder einem Umlaufkreislauf 11 oder einer Behandlungszone 2 zugeführt werden. Bevorzugt wird der wenigstens eine abgezweigte Teilstrom 19 wieder derjenigen Behandlungsflüssigkeit 4 desselben Umlaufkreislaufes 11, aus der er entnommen wurde, zugeführt, wie dies auch in der Fig. 1 dargestellt ist. Dies ist unter anderem deshalb von Vorteil, da ein Temperaturniveau des wenigstens einen Teilstromes 19 zumindest im Wesentlichen jenem Temperaturniveau der in dem Umlaufkreislauf 11 geführten Behandlungsflüssigkeit 4 entspricht.

Auf diese Weise können im Betrieb der Pasteurisierungsanlage 1 fortwährend bzw. andauernd unerwünschte Stoffe aus der Behandlungsflüssigkeit 4 entfernt werden. Einerseits kann so eine möglichst ungetrübte und keimfreie Behandlungsflüssigkeit 4 für den laufenden Betrieb einer Pasteurisierungsanlage 1 bereitgestellt werden. Zusätzlich kann die Konzentration von unerwünschten Ionen, etwa Metallkationen wie zum Beispiel Aluminium-Ionen bzw. in ionischer Form vorliegende Aluminiumverbindungen, möglichst geringgehalten werden.

Zudem kann vorgesehen sein, dass im Betrieb der Pasteurisierungsanlage 1 mittels des mindestens einen, stark sauren Kationenaustauschers der Ionenaustauschvorrichtung 24, ein pH-Wert des Teilstromes hinsichtlich eines gewünschten pH-Niveaus beeinflusst wird, da die aus dem Teilstrom 19 entfernten Kationen durch solvatisierte H⁺-Ionen ersetzt werden.

Weitere, vorteilhafte Ausgestaltungsvarianten der Pasteurisierungsanlage 1 bzw. Ausführungsformen des Verfahrens werden anhand der Fig. 2 näher erläutert. In der Fig. 2 werden für gleiche Teile gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen.

Wie in der Fig. 2 dargestellt ist, ein aus einem Umlaufkreislauf 11 abgezweigter Teilstrom 19 der Behandlungsflüssigkeit zunächst durch eine Membranfiltrationsvorrichtung 23 geleitet bzw. geführt. Die Membranfiltrationsvorrichtung 23 der Reinigungsvorrichtung 16 kann mehrere Filtermodule 26 umfassen, wobei in der Fig. 2 rein beispielhaft 4 Filtermodule 26 dargestellt sind. Die Anzahl an Filtermodulen 26, und auch die Filtrationskapazität der Filtermodule 26 kann jeweils gemäß einem zu erwartenden Verunreinigungsgrad und/oder an das im Betrieb insgesamt durch die Pasteurisierungsanlage 1 geführte Volumen an Behandlungsflüssigkeit angepasst gewählt werden. Im Prinzip können die Filtermodule 26 der Membranfiltrationsvorrichtung 23 beliebig in der Membranfiltrationsvorrichtung 23 angeordnet sein, beispielsweise strömungstechnisch seriell hintereinandergeschaltet. Bei dem in der Fig. 2 dargestellten Ausführungsbeispiel sind die Filtermodule 26 strömungstechnisch parallel zueinander angeordnet, sodass jeweils eine Teilmenge des Teilstromes 19 über bzw. durch ein Filtermodul 26 geführt werden kann.

Die Ausgestaltung der einzelnen Filtermodule 26 kann im Grunde genommen ebenfalls beliebig gewählt sein, solange eine temperierte, wässrige Behandlungsflüssigkeit hiermit filtriert werden kann. Ein Filtermodul 26 kann zum Beispiel eine Vielzahl an Hohlfasermembranen aufweisen, welche in einem beschickungsseitigen Retentat-Raum 27 angeordnet sein können. Diese Hohlfasermembranen können zum Beispiel Poren mit einem Porendurchmesser zwischen 0,01 µm und 0,5 µm aufweisen, um für Mikro- bzw. Ultrafiltration geeignet zu sein. Die jeweils offenen Enden der Hohlfasermembranen eines Filtermoduls 26 können in einem Dichtmittel 28 derart eingebettet sein, dass die offenen Enden bzw. die innenseitigen Hohlräume der Hohlfasern in einen Filtrat- bzw. Permeat-Raum 29 eines Filtermoduls 26 münden. Das Dichtmittel 28 kann hierbei den Retentat-Raum 27 von dem Permeat-Raum 29 dichtend abtrennen, sodass der wenigstens eine Teilstrom 19 der wässrigen Behandlungsflüssigkeit von den Retentat-Räumen 27 lediglich via Durchdringen der Hohlfasermembranwände von einer Außenseite der Hohlfasermembranen in das Innenlumen der Hohlfasern in die Permeat-Räume 29 der Filtermodule 26 gelangen kann. Hierbei wird der wenigstens eine Teilstrom 19 filtriert, und werden partikuläre bzw. koagulierte Verunreinigungen retentat-seitig zurückgehalten.

Wie weiters in der Fig. 2 dargestellt ist, können die Filtermodule 26 einer Membranfiltrationsvorrichtung 23, jeweils bedarfsweise absperrbar oder durchströmbar, permeat- bzw. filtrat-seitig mit einer Rückspülflüssigkeitsquelle 30, und retentat- bzw. beschickungsseitig mit einem Abfluss 31 leitungsverbunden sein. Hierdurch können die Filtermodule 26 der Membranfiltrationsvorrichtung 23 zur Reinigung der Filtermembranen, beispielsweise der Hohlfasermembranen, unter Umkehrung der Flussrichtung über die Filtermodule 26 mit einer Rückspülflüssigkeit gereinigt werden. Beispielsweise können die Filtermembranen auf diese Weise retentat-seitig von einem Filterkuchen befreit werden. Hierbei kann zum Beispiel vorgesehen sein, dass alle Filtermodule 26 einer Membranfiltrationsvorrichtung 23 gemeinsam gereinigt werden, wie dies auch in der Fig. 2 angedeutet ist. Alternativ kann aber auch vorgesehen sein, dass jeweils Gruppen von Filtermodulen, oder sogar jedes Filtermodul 26 separat wahlweise absperrbar oder durchströmbar mit einer Rückspülflüssigkeitsquelle 30 und einem Abfluss 31 leitungsverbunden sind. Als Rückspülflüssigkeit kann zum Beispiel sauberes Frischwasser verwendet werden, welchem gegebenenfalls Reinigungschemikalien zugesetzt werden können. Zusätzlich können die Filtermembranen retentat-seitig auch mit einem Gas umspült werden, um die Reinigung unter Rückspülung zu unterstützen, bzw. um die Bildung eines Filterkuchens hintanzuhalten.

Wie in der Fig. 2 dargestellt ist, ist strömungstechnisch folgend auf die Membranfiltrationsvorrichtung 23 eine Ionenaustauschvorrichtung 24 in der Reinigungsvorrichtung 16 angeordnet. Die Ionenaustauschvorrichtung 24 weist mindestens einen, stark sauren Kationenaustauscher 32 auf. Bei dem Ausführungsbespiel gemäß der Fig. 2 umfasst die Ionenaustauschvorrichtung 24 zwei Kationenaustauscher 32. Wie bereits beschrieben, kann im Betrieb der Pasteurisierungsanlage 1 mittels des oder der Kationenaustauscher(s) 32 ein pH-Wert des Teilstromes 19 hinsichtlich eines gewünschten pH-Niveaus beeinflusst werden. Ein stark saurer Kationenaustauscher 32 kann zum Beispiel eine Ionenaustauschermatrix bzw. ein Ionenaustauscherharz mit Sulfonsäuregruppen als aktive Gruppen umfassen.

Wie des Weiteren in der Fig. 2 dargestellt ist, kann aber auch vorgesehen sein, dass die Ionenaustauschvorrichtung 24 mindestens einen stark basischen Anionenaustauscher 33 umfasst. Dadurch können im Betrieb der Pasteurisierungsanlage 1 auch unerwünschte Anionen mittels des mindestens einen stark basischen Anionenaustauschers 33 aus dem wenigstens einen, abgezweigten Teilstrom 19 entfernt werden. Ein stark basischer Anionenaustauscher kann zum Beispiel eine Ionenaustauschermatrix bzw. ein Ionenaustauscherharz mit quartären Ammoniumgruppen als aktive Gruppen umfassen. Im Betrieb der Pasteurisierungsanlage 1 kann mittels des mindestens einen, stark basischen Anionenaustauschers ein pH-Wert des wenigstens einen Teilstromes 19 hinsichtlich eines gewünschten pH-Niveaus beeinflusst werden. Eine Beeinflussung des pH-Wertes des wenigstens einen Teilstromes 19 kann zum Beispiel via Regulierung einer Durchflussmenge der Behandlungsflüssigkeit durch den oder die Ionenaustauscher 32, 33 und/oder durch die gesamte Ionenaustauschvorrichtung 24 erfolgen, wie dies noch näher erläutert wird.

Grundsätzlich kann für eine gezielte Beeinflussung des pH-Wertes des wenigstens einen Teilstromes 19 vorgesehen sein, dass ein Verhältnis einer Ionenaustauschtotalkapazität aller vorhandenen, stark sauren Kationenaustauscher 32 zu einer Ionenaustauschtotalkapazität aller vorhandener, stark basischen Anionenaustauscher 33 bedarfsabhängig hinsichtlich eines gewünschten pH-Wertes des wenigstens einen Teilstromes 19 bzw. der Behandlungsflüssigkeit gewählt ist. Bevorzugt wird ein pH-Wert des wenigstens einen Teilstromes 19 hinsichtlich bzw. in Richtung eines geringfügig sauren Niveaus beeinflusst. Beispielsweise kann ein durchschnittlicher pH-Wert der Behandlungsflüssigkeit zwischen 4 und 7 im Betrieb der Pasteurisierungsanlage 1 vorteilhaft für die Behandlung der Außenseite der Behältnisse sein. Dies kann zum Beispiel zweckmäßig sein, um die Bildung der sogenannten Brunnenwasserschwärze an Aluminiumwerkstoffen an den behandelten Behältnissen hintanzuhalten. Dementsprechend kann die Ionenaustauschtotalkapazität aller vorhandenen, stark sauren Kationenaustauscher 32 größer gewählt sein, als die Ionenaustauschtotalkapazität aller vorhandener, stark basischen Anionenaustauscher 33. Dies selbstverständlich unter Berücksichtigung einer für eine effiziente Entfernung unerwünschter, gelöster Ionen aus dem wenigstens einen Teilstrom 19 jeweils ausreichender Ionenaustauschtotalkapazität.

Bei einer vorteilhaften Verfahrensführung kann es zweckmäßig sein, wenn ein Gehalt gelöster Ionen in dem Teilstrom 19 jeweils vor und nach der Ionenaustauschvorrichtung 24 sensorisch überwacht wird. Hierzu kann strömungstechnisch vor und nach der Ionenaustauschvorrichtung 24 jeweils ein Sensormittel zur Überwachung eines Gehalts an gelösten Ionen in dem Teilstrom 19 angeordnet sein. Solche Sensormittel können zum Beispiel durch Leitfähigkeitssensoren oder andere, geeignete Messgeräte, welche einen Rückschluss auf den Gehalt an Ionen erlauben, gebildet sein.

Wie in der Fig. 2 als Beispiel dargestellt ist, kann strömungstechnisch vor und nach der Ionenaustauschvorrichtung 24 jeweils ein pH-Wert-Sensor 34 angeordnet sein. Im Betrieb der Pasteurisierungsanlage 1 kann hierdurch ein Gehalt gelöster Ionen in dem wenigstens einen Teilstrom 19 durch Messung eines pH-Wert des wenigstens einen Teilstromes 19 jeweils vor und nach dem Abziehen von Ionen mittels der Ionenaustauschvorrichtung 24, überwacht werden.

So kann durch Vorsehen der pH-Sensoren 34 beispielsweise ein plötzlicher Anstieg der Konzentration gelöster Ionen in dem Teilstrom 19 bzw. allgemein in der Behandlungsflüssigkeit detektiert werden. Zum Beispiel kann ein plötzlicher Anstieg der Konzentration an Metallkationen in der Behandlungsflüssigkeit detektiert werden, da diese Metallkationen via den mindestens einen, stark sauren Kationenaustauscher 32 gegen solvatisierte H⁺-Ionen ausgetauscht werden. Dies ist wiederum mittels der pH-Wert-Sensoren 34 unmittelbar durch ein plötzliches Absinken des pH-Wertes des wenigstens einen Teilstromes 19 nach dessen Hindurchführung durch den mindestens einen Kationenaustauscher 32 der Ionenaustauschvorrichtung 24 detektierbar ist. Gegebenenfalls können in weiterer Folge Gegenmaßnahmen ergriffen werden, um eine weitere Verunreinigung der Behandlungsflüssigkeit mit unerwünschten, gelösten Ionen hintanzuhalten. Allenfalls können durch Vorsehen der pH-Wert-Sensoren 34 sogar Fehler bei der Durchführung des Pasteurisierungsverfahrens bzw. unplanmäßige und unerwünschte Einflüsse auf das Verfahren, zum Beispiel durch undichte oder mit Metall- bzw. Aluminiumstaub verschmutzte Behältnisse detektiert werden. Eine derartige Anordnung von pH-Sensoren 34 ist andererseits auch zweckmäßig als Referenzmittel bzw. Messmittel für die Beeinflussung des pH-Wertes des wenigstens einen Teilstromes 19 hinsichtlich in Richtung eines gewünschten pH-Niveaus.

Ein pH-Wert des wenigstens einen, abgezweigten Teilstromes 19 kann mittels der Ionenaustauschvorrichtung 24 zum Beispiel dadurch beeinflusst werden, dass eine Durchflussmenge der Behandlungsflüssigkeit durch die Ionenaustauschvorrichtung 24 reguliert wird. Hierzu kann zum Beispiel der wenigstens einen Reinigungsvorrichtung 16 eine Durchflussmengenregulierungsvorrichtung 35 als Steuerungsmittel 21 zur Regelung bzw. Einstellung eines bestimmten Volumenstromes des wenigstens einen Teilstromes 19 zugeordnet sein, wie dies sowohl in der Fig. 1 als auch der Fig. 2 veranschaulicht ist. Eine Durchflussmengenregulierungsvorrichtung 35 kann ein Durchflussmengenregelorgan 36, wie etwa ein Durchflussregulierungsventil oder eine verstellbare Klappe, oder andere geeignet verstellbare Regelorgane umfassen. Des Weiteren kann eine Durchflussmengenregulierungsvorrichtung 35 ein Durchflusssensormittel 37 zur Messung einer jeweiligen Durchflussmenge der Behandlungsflüssigkeit bzw. eines Volumenstromes des wenigstens einen abgezweigten Teilstromes 19 durch die Reinigungsvorrichtung 16 umfassen. Im Betrieb der Pasteurisierungsanlage 1 kann so die zur Bildung des wenigstens einen Teilstromes 19 aus dem mindestens einen Umlaufkreislauf 11 abgezweigte Teilmenge an Behandlungsflüssigkeit 4 mittels einer Durchflussmengenregulierungsvorrichtung 35 geregelt werden. Dadurch kann wiederum ein pH-Wert des wenigstens einen Teilstromes 19 beeinflusst werden, da je nach Durchflussmenge bzw. je nach einem Volumenstrom des wenigstens einen Teilstromes 19 mehr oder weniger, gelöste Ionen mittels des oder der stark sauren Kationenaustauscher(s) 32, und gegebenenfalls des oder der stark basischen Anionenaustauscher(s) 33 ausgetauscht werden. Wie in der Fig. 2 schematisch angedeutet ist, kann zur Regulierung einer Durchflussmenge der Behandlungsflüssigkeit durch die Reinigungsvorrichtung 16 auch ein zusätzliches Fördermittel 12, beispielsweise eine vorzugsweise drehzahlgeregelte Pumpe, verwendet werden.

Im Prinzip kann eine Ionenaustauschvorrichtung 24 in der wenigstens einen Reinigungsvorrichtung 16 derart angeordnet sein, dass der gesamte, wenigstens eine aus einem Umlaufkreislauf 11 abgezweigte bzw. entnommene Teilstrom 19 der Behandlungsflüssigkeit 4 durch die Ionenaustauschvorrichtung 24 geführt wird, wie dies schematisch in der Fig. 1 dargestellt ist. Es kann aber auch zweckmäßig sein, dass die Ionenaustauschvorrichtung 24 über wenigstens ein Durchflussmengenregulierungsmittel 38 strömungstechnisch parallel zu einer Durchflussleitung 39 für den Teilstrom 19 in der wenigstens einen Reinigungsvorrichtung 16 angeordnet ist, wie dies für das Ausführungsbeispiel gemäß der Fig. 2 dargestellt ist. Hierdurch kann im Betrieb der Pasteurisierungsanlage 1 mittels wenigstens eines Durchflussmengenregulierungsmittels 38, beispielsweise wiederum einem Durchflussmengenregelorgan 36, zumindest ein Teil der Behandlungsflüssigkeit aus dem Teilstrom 19 entnommen, über die Ionenaustauschvorrichtung 24 geführt, und anschließend wieder in den Teilstrom 19 zurückgeführt werden. Hierdurch kann grundsätzlich eine Durchflussmenge der Behandlungsflüssigkeit durch die Ionenaustauschvorrichtung 24 unabhängig von weiteren Elementen der wenigstens einen Reinigungsvorrichtung 16 geregelt werden, und somit die pro Zeiteinheit ausgetauschte Menge an gelösten Ionen gezielt beeinflusst werden. Im Besonderen kann auch eine Beeinflussung des pH-Wertes des wenigstens einen Teilstromes 19 unabhängig von anderen Elementen der wenigstens einen Reinigungsvorrichtung 16 vorgenommen werden. Wie in der Fig. 2 angedeutet ist, kann zur Regulierung einer Durchflussmenge der Behandlungsflüssigkeit durch die Ionenaustauschvorrichtung 24 wiederum auch ein zusätzliches Fördermittel 12, beispielsweise eine vorzugsweise drehzahlgeregelte Pumpe, eingesetzt werden.

Alternativ oder zusätzlich kann es aber auch vorteilhaft sein, wenn jedem Ionenaustauscher 32, 33 der Ionenaustauschvorrichtung 24 ein Durchflussmengenregulierungsmittel 38 zugeordnet ist. Hierdurch kann im Betrieb der Pasteurisierungsanlage 1 eine Durchflussmenge der Behandlungsflüssigkeit durch den oder die Ionenaustauscher 32, 33 mittels jeweils eines Durchflussmengenregulierungsmittels 38 für jeden Ionenaustauscher 32, 33 der Ionenaustauschvorrichtung 24 separat geregelt werden, wie aus der Fig. 2 ersichtlich ist. Auf diese Weise kann die Entfernung von gelösten Ionen aus dem wenigstens einen Teilstrom 19 noch genauer geregelt bzw. gesteuert werden, und kann zusätzlich eine weiter verbesserte bzw. genauere Beeinflussung des pH-Wertes des wenigstens einen Teilstromes 19 vorgenommen werden.

Wie weiters in der Fig. 2 dargestellt ist, kann die Ionenaustauschvorrichtung 24 mit mindestens einem Regenerierungsmittel 40, 41 zur Regenerierung des oder der Ionenaustauscher(s) 32, 33 strömungstechnisch leitungsverbunden sein. Hierbei kann natürlich ein Regenerierungsmittel 40 mit Regenerierungsflüssigkeit für den oder die Kationenaustauscher 32, und ein Regenerierungsmittel 41 mit Regenerierungsflüssigkeit für den oder die Anionenaustauscher 33 vorgesehen sein. Im Betrieb der Pasteurisierungsanlage 1 können die Ionenaustauscher 32, 33 sodann jeweils bedarfsabhängig regeneriert werden. Im Besonderen kann vorgesehen sein, dass der mindestens eine, stark saure Kationenaustauscher 32 in Abhängigkeit von einer pH-Wert-Änderung des Teilstromes 19 regeneriert wird. Ebenso kann vorgesehen sein, dass der mindestens eine, stark basische Anionenaustauscher 33 in Abhängigkeit von einer pH-Wert-Änderung des Teilstromes 19 regeneriert wird. Hierzu können wie bereits beschrieben, pH-Wert-Sensoren 34 jeweils vor und nach der Ionenaustauschvorrichtung 24 vorgesehen sein. Verwendete Regenerierungsflüssigkeit kann wiederum über einen Abfluss 31 abgeführt werden.

Zur weiteren Verbesserung der Reinigungseffizienz für die Behandlungsflüssigkeit, kann die die wenigstens einen Reinigungsvorrichtung 16 eine weitere Flüssigkeitsbehandlungsvorrichtung 42 mit Metallpartikeln oder einem Metallgeflecht aufweisend Kupfer und/oder Zink umfassen. Diese Flüssigkeitsbehandlungsvorrichtung 42 kann in der wenigstens einen Reinigungsvorrichtung 16 strömungstechnisch zwischen der Membranfiltrationsvorrichtung 23 und der Ionenaustauschvorrichtung 24 angeordnet sein. Auch die Flüssigkeitsbehandlungsvorrichtung 42 kann wahlweise absperrbar oder durchströmbar, strömungstechnisch parallel zu einer Durchflussleitung 39 für den Teilstrom 19 in der wenigstens einen Reinigungsvorrichtung 16 angeordnet sein, wie dies in der Fig. 2 veranschaulicht ist. Im Betrieb der Pasteurisierungsanlage 1 kann der wenigstens eine Teilstrom sodann vor dem Abziehen der gelösten Ionen zusätzlich durch eine Flüssigkeitsbehandlungsvorrichtung, umfassend Metallpartikeln oder ein Metallgeflecht aufweisend Kupfer und/oder Zink, geleitet werden.

Mittels einer derartigen Flüssigkeitsbehandlungsvorrichtung 42 können im Betrieb der Pasteurisierungsanlage 1 spontane Oxidations- und oder Reduktionsreaktionen von einigen in der Behandlungsflüssigkeit gelösten Stoffen ausgelöst werden. Hierdurch können zum Beispiel im Vergleich zu Zink und/oder Kupfer, edlere Metallkationen, beispielsweise SchwermetallIonen, Eisen-Ionen, etc. aus einem abgezweigten Teilstrom 19 abgeschieden werden. Dies ist wiederum von Vorteil für die Effizienz der nachfolgenden Ionenaustauschvorrichtung 24, da die bereits mittels der Flüssigkeitsbehandlungsvorrichtung 42 entfernten Ionen nicht mehr mittels der Ionenaustauschvorrichtung 24 aus dem wenigstens einen Teilstrom 19 abgezogen werden müssen, bzw. hinsichtlich des Ionenaustausches nicht mit weiteren, gelösten Ionen in dem Teilstrom 19 konkurrieren. Die nutzbare Ionenaustauschkapazität der Ionenaustauscher 32, 33 der Ionenaustauschvorrichtung 24 steht somit vorteilhafterweise für das Abziehen bzw. Entfernen weiterer unerwünschter, mittels der Flüssigkeitsbehandlungsvorrichtung 42 nicht entfernbarer gelöster Ionen, etwa für Aluminium-Ionen bzw. Ionen von Aluminiumverbindungen zur Verfügung.

Des Weiteren kann vorgesehen sein, dass die wenigstens eine Reinigungsvorrichtung 16 eine Adsorptionsvorrichtung 43 umfasst, welche Adsorptionsvorrichtung 43 strömungstechnisch nach der Ionenaustauschvorrichtung 24 angeordnet ist. Die Adsorptionsvorrichtung 43 kann zum Beispiel einen Aktivkohlefilter 44 aufweisen. Hierdurch können im Betrieb der Pasteurisierungsanlage 1 nachfolgend auf das Abziehen gelöster Ionen mittels der Ionenaustauschvorrichtung 24 zusätzlich gelöste Stoffe mittels einer Adsorptionsvorrichtung 43, beispielsweise mittels einem Aktivkohlefilter 44 aus dem wenigstens einen Teilstrom 19 abgezogen werden.

Grundsätzlich kann es zweckmäßig sein, wenn die wenigstens eine Reinigungsvorrichtung 16 an einem Umlaufkreislauf 11 angeordnet ist bzw. mit einem Umlaufkreislauf 11 leitungsverbunden ist, in welchem Umlaufkreislauf 11 im Betrieb der Pasteurisierungsanlage 1 Behandlungsflüssigkeit 4 mit verhältnismäßig geringer Temperatur geführt wird, wie die auch in der Fig. 1 veranschaulicht ist. Dadurch können insbesondere die einzelnen Vorrichtungen 23, 26, 42, 43 der wenigstens einen Reinigungsvorrichtung 16 möglichst schonend betrieben werden. Dennoch kann eine effiziente, fortwährende Reinigung der Behandlungsflüssigkeit 4 vorgenommen werden, da in der Pasteurisierungsanlage 1 eine ständige Durchmischung der einzelnen Volumenelemente der Behandlungsflüssigkeit 4 aufgrund des Fließens bzw. der Zwangsförderung der Behandlungsflüssigkeit über den Umlaufkreislauf 11 oder die Umlaufkreisläufe 11 stattfindet. In anderen Worten ausgedrückt werden in solchen Fällen einzelne Volumenelemente der Behandlungsflüssigkeit 4 im laufenden Betrieb mit der Zeit über wechselnde Umlaufkreisläufe 11 geführt bzw. in und aus wechselnden Behandlungszonen 2 zu- und abgeführt. Dadurch ist es in weiterer Folge auch möglich, ein pH-Wertniveau der gesamten Behandlungsflüssigkeit durch Austausch der gelösten Ionen des wenigstens einen Teilstromes 19 mittels der Ionenaustauschvorrichtung 24 der wenigstens einen Reinigungsvorrichtung 16 zu beeinflussen.

In der Fig. 3 ist schließlich ein weiteres Ausführungsbeispiel für eine Pasteurisierungsanlage 1 ausschnittsweise dargestellt, welches für die fortwährende Wiederverwendung und Reinhaltung der Behandlungsflüssigkeit 4 von Vorteil sein kann. In der Fig. 3 werden für gleiche Teile gleiche Bezugszeichen bzw. Bauteilbezeichnungen wie in den vorangegangenen Fig. 1 und 2 verwendet. Um unnötige Wiederholungen zu vermeiden, wird auf die detaillierte Beschreibung in den vorangegangenen Fig. 1 und Fig. 2 hingewiesen bzw. Bezug genommen.

Wie aus dem Ausführungsbeispiel der in der Fig. 3 ausschnittsweise dargestellten Pasteurisierungsanlage 1 ersichtlich ist, kann vorgesehen sein, dass die Pasteurisierungsanlage 1 einen luftgekühlten Kühlturm 45 umfasst, welcher einen bedarfsweise von der Behandlungsflüssigkeit 4 durchströmbaren Wärmetauscher 46 aufweist. Auf diese Weise kann bedarfsabhängig ein Teilvolumenstrom der Behandlungsflüssigkeit 4 durch einen Wärmetauscher 46 eines luftgekühlten Kühlturmes 45 geleitet werden.

Luftgekühlte Kühltürme werden in Pasteurisierungsanlagen häufig zur Abkühlung eines Teiles der Behandlungsflüssigkeit 4 benötigt, welche abgekühlte Behandlungsflüssigkeit 4 beispielsweise wiederum zum Abkühlen von Behältnissen nach erfolgter Pasteurisierung eingesetzt werden kann. Aufgrund der meist erforderlichen, großen Kühlkapazität von Kühltürmen, kann ein Eintrag von Verunreinigungen bei konventionellen Kühltürmen ohne Wärmetauscher hierbei beträchtlich sein. Durch das Vorsehen des Wärmetauschers 46 kann ein Einbringen von Verunreinigungen in die Behandlungsflüssigkeit 4 durch bzw. in dem luftgekühlten Kühlturm 45 wirksam hintangehalten werden.

Wie in der Fig. 3 dargestellt ist, kann zur Abkühlung einer Teilmenge der Behandlungsflüssigkeit 4 zum Beispiel vorgesehen sein, dass bedarfsabhängig eine Teilmenge der Behandlungsflüssigkeit 4 aus einem Umlaufkreislauf 11 mittels eines Fördermittels 12 in ein Behandlungsflüssigkeitsreservoir 47, beispielsweise in Sammelbecken oder ähnliches, überführt wird. Ebenfalls bedarfsabhängig kann sodann mittels einem weiteren Fördermittel 12 Behandlungsflüssigkeit 4 aus dem Behandlungsflüssigkeitsreservoir 47 durch den Wärmetauscher 46 des Kühlturmes 45 gepumpt, hierbei durch Kühlungsluft abgekühlt, und wieder in das Behandlungsflüssigkeitsreservoir 47 zurückgeführt werden. Die gekühlte Behandlungsflüssigkeit 4 aus dem Behandlungsflüssigkeitsreservoir 47 kann sodann dem in der Fig. 3 beispielhaft dargestellten Umlaufkreislauf 11 zugeführt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Pasteurisierungsanlage | 31 | Abfluss |
| 2 | Behandlungszone | 32 | Kationenaustauscher |
| 3 | Zuführmittel | 33 | Anionenaustauscher |
| 4 | Behandlungsflüssigkeit | 34 | pH-Wert-Sensor |
| 5 | Außenseite | 35 | Durchflussmengenregulierungsvorrichtung |
| 6 | Behältnis | | |
| 7 | Transportvorrichtung | 36 | Durchflussmengenregelorgan |
| 8 | Förderband | 37 | Durchflusssensormittel |
| 9 | Transportrichtung | 38 | Durchflussmengenregulierungsmittel |
| 10 | Bodenbereich | | |
| 11 | Umlaufkreislauf | 39 | Durchflussleitung |
| 12 | Fördermittel | 40 | Regenerierungsmittel |
| 13 | Mittel | 41 | Regenerierungsmittel |
| 14 | Mittel | 42 | Flüssigkeitsbehandlungsvorrichtung |
| 15 | Heizvorrichtung | | |
| 16 | Reinigungsvorrichtung | 43 | Adsorptionsvorrichtung |
| 17 | Entnahmemittel | 44 | Aktivkohlefilter |
| 18 | Rückführmittel | 45 | Kühlturm |
| 19 | Teilstrom | 46 | Wärmetauscher |
| 20 | T-Stück | 47 | Behandlungsflüssigkeitsreservoir |
| 21 | Steuerungsmittel | | |
| 22 | Absperrmittel | | |
| 23 | Membranfiltrationsvorrichtung | | |
| 24 | Ionenaustauschvorrichtung | | |
| 25 | Führungsmittel | | |
| 26 | Filtermodul | | |
| 27 | Retentat-Raum | | |
| 28 | Dichtmittel | | |
| 29 | Permeat-Raum | | |
| 30 | Rückspülflüssigkeitsquelle | | |

## Patentansprüche

1. Verfahren zum Betreiben einer Pasteurisierungsanlage (1), umfassend Transportieren von mit Lebensmitteln befüllten und verschlossenen Behältnissen (6) durch eine oder mehrere Behandlungszone(n) (2),
Behandeln der Behältnisse (6) mit einer temperierten, wässrigen Behandlungsflüssigkeit (4) in der oder den Behandlungszone(n) (2) durch Applizieren der Behandlungsflüssigkeit (4) auf eine Außenseite (5) der Behältnisse (6),
wobei die Behandlungsflüssigkeit (4) aus der oder den Behandlungszone(n) (2) zur Wiederverwendung in mindestens einem Umlaufkreislauf (11) wieder in eine Behandlungszone (2) zurückgeführt wird,
**dadurch gekennzeichnet, dass**
fortwährend eine Teilmenge eines pro Zeiteinheit über den mindestens einen Umlaufkreislauf (11) geführten Volumenstromes der Behandlungsflüssigkeit (4) zur Bildung wenigstens eines Teilstromes (19) abgezweigt wird,
welcher wenigstens eine Teilstrom (19) mittels einer Membranfiltrationsvorrichtung (23) filtriert wird,
und folgend aus dem wenigstens einen Teilstrom (19) mittels einer Ionenaustauschvorrichtung (24), aufweisend mindestens einen, stark sauren Kationenaustauscher (32), gelöste Ionen abgezogen werden,
und der wenigstens eine Teilstrom (19) anschließend wieder in einen Umlaufkreislauf (11) oder eine Behandlungszone (2) zurückgeführt wird.

2. Verfahren nach Anspruch 1, **dadurch gekennzeichnet, dass** mittels des mindestens einen, stark sauren Kationenaustauschers (32) ein pH-Wert des Teilstromes (19) hinsichtlich eines gewünschten pH-Niveaus beeinflusst wird.

3. Verfahren nach Anspruch 1 oder 2, **dadurch gekennzeichnet, dass** der mindestens eine, stark saure Kationenaustauscher (32) in Abhängigkeit von einer pH-Wert-Änderung des Teilstromes (19) regeneriert wird.

4. Verfahren nach einem der vorhergehenden Ansprüche, **dadurch gekennzeichnet, dass** Anionen mittels mindestens eines stark basischen Anionenaustauschers (33) aus dem Teilstrom (19) abgezogen werden.

5. Verfahren nach Anspruch 4, **dadurch gekennzeichnet, dass** mittels des mindestens einen, stark basischen Anionenaustauschers (33) ein pH-Wert des Teilstromes (19) hinsichtlich eines gewünschten pH-Niveaus beeinflusst wird.

6. Verfahren nach Anspruch 4 oder 5, **dadurch gekennzeichnet, dass** der mindestens eine, stark basische Anionenaustauscher (33) in Abhängigkeit von einer pH-Wert-Änderung des Teilstromes (19) regeneriert wird.

7. Verfahren nach einem der vorhergehenden Ansprüche, **dadurch gekennzeichnet, dass** ein Gehalt gelöster Ionen in dem Teilstrom (19) jeweils vor und nach der Ionenaustauschvorrichtung (24) sensorisch überwacht wird.

8. Verfahren nach Anspruch 7, **dadurch gekennzeichnet, dass** ein Gehalt gelöster Ionen in dem Teilstrom (19) durch Messung eines pH-Wert des Teilstromes (19) jeweils vor und nach dem Abziehen von Ionen mittels der Ionenaustauschvorrichtung (24), überwacht wird.

9. Verfahren nach einem der vorhergehenden Ansprüche, **dadurch gekennzeichnet, dass** die zur Bildung des Teilstromes (19) aus dem mindestens einen Umlaufkreislauf (11) abgezweigte Teilmenge an Behandlungsflüssigkeit (4) mittels einer Durchflussmengenregulierungsvorrichtung (35) geregelt wird.

10. Verfahren nach einem der vorhergehenden Ansprüche, **dadurch gekennzeichnet, dass** mittels wenigstens eines Durchflussmengenregulierungsmittels (38) zumindest ein Teil der Behandlungsflüssigkeit (4) aus dem Teilstrom (19) entnommen, über die Ionenaustauschvorrichtung (24) geführt, und anschließend wieder in den Teilstrom (19) zurückgeführt wird.

11. Verfahren nach Anspruch 10, **dadurch gekennzeichnet, dass** eine Durchflussmenge der Behandlungsflüssigkeit (4) durch den oder die Ionenaustauscher (32, 33) mittels jeweils eines Durchflussmengenregulierungsmittels (38) für jeden Ionenaustauscher (32, 33) der Ionenaustauschvorrichtung (24) separat geregelt wird.

12. Verfahren nach einem der vorhergehenden Ansprüche, **dadurch gekennzeichnet, dass** der Teilstrom (19) vor dem Abziehen der gelösten Ionen zusätzlich durch eine Flüssigkeitsbehandlungsvorrichtung (42), umfassend Metallpartikeln oder ein Metallgeflecht aufweisend Kupfer und/oder Zink, geleitet wird.

13. Verfahren nach einem der vorhergehenden Ansprüche, **dadurch gekennzeichnet, dass** nachfolgend auf das Abziehen gelöster Ionen zusätzlich gelöste Stoffe mittels einer Adsorptionsvorrichtung (43) aus dem Teilstrom (19) abgezogen werden.

14. Verfahren nach Anspruch 13, **dadurch gekennzeichnet, dass** die gelösten Stoffe mittels einem Aktivkohlefilter (44) aus dem Teilstrom (19) abgezogen werden.

15. Verfahren nach einem der vorhergehenden Ansprüche, **dadurch gekennzeichnet, dass** die Lebensmittel in den Behältnissen (6) in einer Behandlungszone (2) erwärmt oder in mehreren Behandlungszonen (2) sukzessive erwärmt werden, nachfolgend in einer Behandlungszone (2) oder mehreren Behandlungszonen (2) pasteurisiert werden, und darauf folgend in einer Behandlungszone (2) abgekühlt oder in mehreren Behandlungszonen (2) sukzessive abgekühlt werden.

16. Verfahren nach einem der vorhergehenden Ansprüche, **dadurch gekennzeichnet, dass** bedarfsabhängig ein Teilvolumenstrom der Behandlungsflüssigkeit (4) durch einen Wärmetauscher (46) eines luftgekühlten Kühlturmes (45) geleitet wird.

17. Verfahren nach einem der vorhergehenden Ansprüche, **dadurch gekennzeichnet, dass** mittels der Pasteurisierungsanlage (1) zumindest zeitweilig einen metallischen Werkstoff aufweisende Behältnisse (6), insbesondere einen Aluminiumwerkstoff aufweisende Behältnisse (6) behandelt werden.

18. Pasteurisierungsanlage (1) zur Durchführung eines Verfahrens gemäß einem der Ansprüche 1 bis 17, umfassend
eine oder mehrere Behandlungszone(n) (2) mit Zuführmittel(n) (3) zur Applikation einer temperierten Behandlungsflüssigkeit (4) auf eine Außenseite (5) von Behältnissen (6),
eine Transportvorrichtung (7) zum Transport der Behältnisse (6) durch die Behandlungszone(n) (2),
und mindestens einen Umlaufkreislauf (11) zum Ableiten der Behandlungsflüssigkeit (4) aus der oder den Behandlungszone(n) (2) und zur Rückführung der abgeleiteten Behandlungsflüssigkeit (4) in eine Behandlungszone (2),
**dadurch gekennzeichnet, dass**
wenigstens eine Reinigungsvorrichtung (16) vorgesehen ist, welche wenigstens eine Reinigungsvorrichtung (16) mit einem Entnahmemittel (17) zur Entnahme eines Teilstromes (19) der Behandlungsflüssigkeit (4) aus dem mindestens einen Umlaufkreislauf (11) strömungstechnisch leitungsverbunden ist, und welche wenigstens eine Reinigungsvorrichtung (16) mit einem Rückführmittel (18) zur Rückführung des Teilstromes (19) in einen Umlaufkreislauf (11) oder eine Behandlungszone (2) strömungstechnisch leitungsverbunden ist,
welche wenigstens eine Reinigungsvorrichtung (16) eine Membranfiltrationsvorrichtung (23) zur Filtrierung des Teilstromes (19) umfasst,
und welche wenigstens eine Reinigungsvorrichtung (16) strömungstechnisch folgend auf die Membranfiltrationsvorrichtung (23) eine Ionenaustauschvorrichtung (24), aufweisend mindestens einen stark sauren Kationenaustauscher (32), umfasst.

19. Pasteurisierungsanlage nach Anspruch 18, **dadurch gekennzeichnet, dass** die Ionenaustauschvorrichtung (24) mindestens einen stark basischen Anionenaustauscher (33) umfasst.

20. Pasteurisierungsanlage nach Anspruch 18 oder 19, **dadurch gekennzeichnet, dass** die Ionenaustauschvorrichtung (24) mit mindestens einem Regenerierungsmittel (40, 41) zur Regenerierung des oder der Ionenaustauscher(s) (32, 33) strömungstechnisch leitungsverbunden ist.

21. Pasteurisierungsanlage nach einem der Ansprüche 18 bis 20, **dadurch gekennzeichnet, dass** strömungstechnisch vor und nach der Ionenaustauschvorrichtung (24) jeweils ein Sensormittel zur Überwachung eines Gehalts an gelösten Ionen in dem Teilstrom (19) angeordnet ist.

22. Pasteurisierungsanlage nach einem der Anspruch 21, **dadurch gekennzeichnet, dass** strömungstechnisch vor und nach der Ionenaustauschvorrichtung (24) jeweils ein pH-Wert-Sensor (34) angeordnet ist.

23. Pasteurisierungsanlage nach Anspruch 19, **dadurch gekennzeichnet, dass** ein Verhältnis einer Ionenaustauschtotalkapazität aller vorhandenen, stark sauren Kationenaustauscher (32) zu einer Ionenaustauschtotalkapazität aller vorhandener, stark basischen Anionenaustauscher (33) bedarfsabhängig hinsichtlich eines gewünschten pH-Wertes des Teilstromes (19) oder der Behandlungsflüssigkeit (4) gewählt ist.

24. Pasteurisierungsanlage nach einem der Ansprüche 18 bis 23, **dadurch gekennzeichnet, dass** der wenigstens einen Reinigungsvorrichtung (16) eine Durchflussmengenregulierungsvorrichtung (35) zugeordnet ist.

25. Pasteurisierungsanlage nach einem der Ansprüche 18 bis 24, **dadurch gekennzeichnet, dass** die Ionenaustauschvorrichtung (24) über wenigstens ein Durchflussmengenregulierungsmittel (38) strömungstechnisch parallel zu einer Durchflussleitung (39) für den Teilstrom (19) in der wenigstens einen Reinigungsvorrichtung (16) angeordnet ist.

26. Pasteurisierungsanlage nach Anspruch 25, **dadurch gekennzeichnet, dass** jedem Ionenaustauscher (32, 33) der Ionenaustauschvorrichtung (24) ein Durchflussmengenregulierungsmittel (38) zugeordnet ist.

27. Pasteurisierungsanlage nach einem der Ansprüche 18 bis 26, **dadurch gekennzeichnet, dass** die wenigstens einen Reinigungsvorrichtung (16) eine weitere Flüssigkeitsbehandlungsvorrichtung (42) mit Metallpartikeln oder einem Metallgeflecht aufweisend Kupfer und/oder Zink, umfasst, welche Flüssigkeitsbehandlungsvorrichtung (42) strömungstechnisch zwischen der Membranfiltrationsvorrichtung (23) und der Ionenaustauschvorrichtung (24) angeordnet ist.

28. Pasteurisierungsanlage nach einem der Ansprüche 18 bis 27, **dadurch gekennzeichnet, dass** die wenigstens eine Reinigungsvorrichtung (16) eine Adsorptionsvorrichtung (43) umfasst, welche Adsorptionsvorrichtung (43) strömungstechnisch nach der Ionenaustauschvorrichtung (24) angeordnet ist.

29. Pasteurisierungsanlage nach Anspruch 28, **dadurch gekennzeichnet, dass** die Adsorptionsvorrichtung (43) einen Aktivkohlefilter (44) aufweist.

30. Pasteurisierungsanlage nach einem der Ansprüche 18 bis 29, **dadurch gekennzeichnet, dass** sie einen luftgekühlten Kühlturm (45) umfasst, welcher einen bedarfsweise von der Behandlungsflüssigkeit (4) durchströmbaren Wärmetauscher (46) aufweist.

## Claims

1. A method for operating a pasteurizing plant (1), comprising
transporting closed containers (6) filled with foods through one or multiple treatment zone(s) (2),
treating the containers (6) with a tempered, aqueous treatment liquid (4) in the treatment zone(s) (2) by applying the treatment liquid (4) to an outer surface (5) of the containers (6),
wherein the treatment liquid (4) is fed back to a treatment zone (2) from the treatment zone(s) (2) for reuse in at least one circulation loop (11),
**characterized in that**
a partial quantity of a volume flow of the treatment liquid (4) led through the at least one circulation loop (11) per time unit is continuously diverted in order to create at least one partial flow (19),
which at least one partial flow (19) is filtered by means of a membrane filtration device (23),
and subsequently, dissolved ions are removed from the at least one partial flow (19) by means of an ion exchange device (24) having at least one strongly acidic cation exchanger (32),
and the at least one partial flow (19) is subsequently fed back into a circulation loop (11) or a treatment zone (2).

2. The method according to claim 1, **characterized in that** a pH level of the partial flow (19) is influenced with respect to a desired pH level by means of the at least one strongly acidic cation exchanger (32).

3. The method according to claim 1 or 2, **characterized in that** the at least one strongly acidic cation exchanger (32) is regenerated depending on a change of the pH level of the partial flow (19).

4. The method according to one of the preceding claims, **characterized in that** the anions are removed from the partial flow (19) by means of at least one strongly alkaline anion exchanger (33).

5. The method according to claim 4, **characterized in that** a pH level of the partial flow (19) is influenced with respect to a desired pH level by means of the at least one strongly alkaline anion exchanger (33).

6. The method according to claim 4 or 5, **characterized in that** the at least one strongly alkaline anion exchanger (33) is regenerated depending on a change of the pH level of the partial flow (19).

7. The method according to one of the preceding claims, **characterized in that** a content of dissolved ions in the partial flow (19) is monitored by sensors both upstream and downstream of the ion exchange device (24).

8. The method according to claim 7, **characterized in that** a content of dissolved ions in the partial flow (19) is monitored by measuring a pH level of the partial flow (19) both before and after removing ions by means of the ion exchange device (24).

9. The method according to one of the preceding claims, **characterized in that** the partial quantity of treatment liquid (4) diverted from the at least one circulation loop (11) in order to create the partial flow (19) is controlled by means of a flow rate regulating device (35).

10. The method according to one of the preceding claims, **characterized in that**, by means of at least one flow rate regulating device (38), at least one part of the treatment liquid (4) is removed from the partial flow (19), led through the ion exchange device (24), and subsequently fed back to the partial flow (19).

11. The method according to claim 10, **characterized in that** a flow rate of the treatment liquid (4) through the ion exchanger(s) (32, 33) is controlled separately by means of a flow rate regulating means (38) for each ion exchanger (32, 33) of the ion exchange device (24).

12. The method according to one of the preceding claims, **characterized in that** the partial flow (19) is additionally directed through a liquid treatment device (42), comprising metal particles or a metal mesh having copper and/or zinc before the removing of the dissolved ions.

13. The method according to one of the preceding claims, **characterized in that**, following the removing of dissolved ions, additionally, dissolved substances are removed from the partial flow (19) by means of an adsorption device (43).

14. The method according to claim 13, **characterized in that** the dissolved substances are removed from the partial flow (19) by means of an activated carbon filter (44).

15. The method according to one of the preceding claims, **characterized in that** the foods in the containers (6) are heated in one treatment zone (2) or successively heated in multiple treatment zones (2), subsequently pasteurized in one treatment zone (2) or multiple treatment zones (2), and, following this, cooled in one treatment zone (2) or successively cooled in multiple treatment zones (2).

16. The method according to one of the preceding claims, **characterized in that** a partial volume flow of the treatment liquid (4) is led through a heat exchanger (46) of an air-cooled cooling tower (45) as needed.

17. The method according to one of the preceding claims, **characterized in that**, by means of a pasteurizing plant (1), containers (6) having a metallic material, in particular containers (6) having an aluminum material, are treated at least temporarily.

18. A pasteurizing plant (1) for carrying out a method according to one of claims 1 to 17, comprising
one or multiple treatment zone(s) (2) with supply means (3) for applying a tempered treatment liquid (4) to an outer surface (5) of containers (6),
a transport device (7) for transporting the containers (6) through the treatment zone(s) (2),
and at least one circulation loop (11) for diverting the treatment liquid (4) from the treatment zone(s) (2) and for feeding the diverted treatment liquid (4) back into a treatment zone (2),
**characterized in that**
at least one cleaning device (16) is provided, which at least one cleaning device (16) is fluidically line-connected with a removal means (17) for removing a partial flow (19) of the treatment liquid (4) from the at least one circulation loop (11), and which at least one cleaning device (16) is fluidically line-connected with a feedback means (18) for feeding back the partial flow (19) to a circulation loop (11) or a treatment zone (2), which at least one cleaning device (16) comprises a membrane filtration device (23) for filtering the partial flow (19),
and which at least one cleaning device (16) comprises an ion exchange device (24) fluidically following the membrane filtration device (23) comprising at least one strongly acidic cation exchanger (32).

19. The pasteurizing plant according to claim 18, **characterized in that** the ion exchange device (24) comprises at least one strongly alkaline anion exchanger (33).

20. The pasteurizing plant according to claim 18 or 19, **characterized in that** the ion exchange device (24) is fluidically line-connected with at least one regeneration means (40, 41) for the regeneration of the ion exchanger(s) (32, 33).

21. The pasteurizing plant according to one of claims 18 to 20, **characterized in that** one sensor means each is arranged fluidically upstream and downstream of the ion exchange device (24) for monitoring a content of dissolved ions in the partial flow (19).

22. The pasteurizing plant according to claim 21, **characterized in that** one pH level sensor (34) each is arranged fluidically upstream and downstream of the ion exchange device (24).

23. The pasteurizing plant according to claim 19, **characterized in that** a ratio of a total ion exchange capacity of all present, strongly acidic cation exchangers (32) to a total ion exchange capacity of all present, strongly alkaline anion exchangers (33) is selected as needed with regard to a desired pH level of the partial flow (19) or the treatment liquid (4).

24. The pasteurizing plant according to one of claims 18 to 23, **characterized in that** a flow rate regulating device (35) is assigned to the at least one cleaning device (16).

25. The pasteurizing plant according to one of claims 18 to 24, **characterized in that** the ion exchange device (24) is arranged via at least one flow rate regulating means (38), fluidically parallel to a flow line (39) for the partial flow (19) in the at least one cleaning device (16).

26. The pasteurizing plant according to claim 25, **characterized in that** each ion exchanger (32, 33) of the ion exchange device (24) is assigned a flow rate regulating means (38).

27. The pasteurizing plant according to one of claims 18 to 26, **characterized in that** the at least one cleaning device (16) comprises a further liquid treatment device (42) with metal particles or a metal mesh having copper and/or zinc, which liquid treatment device (42) is arranged fluidically between the membrane filtration device (23) and the ion exchange device (24).

28. The pasteurizing plant according to one of claims 18 to 27, **characterized in that** the at least one cleaning device (16) comprises an adsorption device (43), which adsorption device (43) is arranged fluidically downstream of the ion exchange device (24).

29. The pasteurizing plant according to claim 28, **characterized in that** the adsorption device (43) comprises an activated carbon filter (44).

30. The pasteurizing plant according to one of claims 18 to 29, **characterized in that** it comprises an air-cooled cooling tower (45), which has a heat exchanger (46) through which the treatment liquid (4) can flow as needed.

## Revendications

1. Procédé pour le contrôle d'une installation de pasteurisation (1), comprenant le transport de récipients (6) remplis de produits alimentaires et fermés à travers une ou plusieurs zones de traitement (2),
le traitement des récipients (6) avec un liquide de traitement (4) tempéré aqueux dans le ou les zones de traitement (2) par l'application du liquide de traitement (4) sur un côté externe (5) des récipients (6),
dans lequel le liquide de traitement (4) est retourné de la ou des zones de traitement (2) vers une zone de traitement (2) pour une réutilisation dans au moins un circuit de recirculation (11),
**caractérisé en ce que**
de manière continue, une quantité partielle d'un flux volumique par unité de temps, guidé sur au moins un circuit de recirculation (11), du liquide de traitement (4) est dérivée pour la formation d'au moins un flux partiel (19),
cet au moins un flux partiel (19) étant filtré au moyen d'au moins un dispositif de filtration par membrane (23),
puis, à partir de l'au moins un flux partiel (19), au moyen d'un dispositif d'échange ionique (24), comprenant au moins un échangeur de cations fortement acide (32), des ions dissous sont extraits,
et l'au moins un flux partiel (19) est ensuite retourné dans un circuit de recirculation (11) ou une zone de traitement (2).

2. Procédé selon la revendication 1, **caractérisé en ce que**, au moyen de l'au moins un échangeur de cations fortement acide (32), une valeur de pH du flux partiel (19) est contrôlée en fonction d'un niveau de pH souhaité.

3. Procédé selon la revendication 1 ou 2, **caractérisé en ce que** l'au moins un échangeur de cations fortement acide (32) est régénéré en fonction d'une variation de la valeur de pH du flux partiel (19).

4. Procédé selon l'une des revendications précédentes, **caractérisé en ce que** des anions sont extraits au moyen d'au moins un échangeur d'anions fortement basique (33) dans le flux partiel (19).

5. Procédé selon la revendication 4, **caractérisé en ce que**, au moyen de l'au moins un échangeur d'anions fortement basique (33), une valeur de pH du flux partiel (19) est contrôlée en fonction d'un niveau de pH souhaité.

6. Procédé selon la revendication 4 ou 5, **caractérisé en ce que** l'au moins un échangeur d'anions fortement basique (33) est régénéré en fonction d'une variation de la valeur de pH du flux partiel (19).

7. Procédé selon l'une des revendications précédentes, **caractérisé en ce qu'**une teneur en ions dissous dans le flux partiel (19) est surveillée à l'aide de capteurs avant et après le dispositif d'échange ionique (24).

8. Procédé selon la revendication 7, **caractérisé en ce qu'**une teneur en ions dissous dans le flux partiel (19) est surveillée par la mesure d'une valeur de pH du flux partiel (19) respectivement avant et après l'extraction des ions au moyen du dispositif d'échange ionique (24).

9. Procédé selon l'une des revendications précédentes, **caractérisé en ce que** la quantité partielle de liquide de traitement (4), dérivée de l'au moins un circuit de recirculation (11) pour la formation du flux partiel (19), est régulée au moyen d'un dispositif de régulation du débit (35).

10. Procédé selon l'une des revendications précédentes, **caractérisé en ce que**, au moyen d'au moins un moyen de régulation de débit (38), au moins une partie du liquide traitement (4) est prélevée dans le flux partiel (19), guidée par l'intermédiaire du dispositif d'échange ionique (24) puis retournée dans le flux partiel (19).

11. Procédé selon la revendication 10, **caractérisé en ce qu'**un débit du liquide de traitement (4) à travers le ou les échangeurs ioniques (32, 33) respectivement d'un moyen de régulation du débit (38) est régulé séparément pour chaque échangeur ionique (32, 33) du dispositif d'échange ionique (24).

12. Procédé selon l'une des revendications précédentes, **caractérisé en ce que** le flux partiel (19) est en outre guidé, avant l'extraction des ions dissous, à travers un dispositif de traitement de liquide (42) comprenant des particules métalliques ou un treillis métallique contenant du cuivre et/ou du zinc.

13. Procédé selon l'une des revendications précédentes, **caractérisé en ce que**, après l'extraction des ions dissous, des matières dissoutes sont en outre extraites du flux partiel (19) au moyen d'un dispositif d'adsorption (43).

14. Procédé selon la revendication 13, **caractérisé en ce que** les matières dissoutes sont extraites du flux partiel (19) au moyen d'un filtre à charbon actif (44).

15. Procédé selon l'une des revendications précédentes, **caractérisé en ce que** les produits alimentaires dans les récipients (6) sont chauffés dans une zone de traitement (2) ou sont chauffés successivement dans plusieurs zones de traitement (2), puis sont pasteurisés dans une zone de traitement (2) ou plusieurs zones de traitement (2) puis refroidis dans une zone de traitement (2) ou refroidis successivement dans plusieurs zones de traitement (2).

16. Procédé selon l'une des revendications précédentes, **caractérisé en ce que**, selon les besoins, un flux volumique partiel du liquide de traitement (4) est guidé à travers un échangeur thermique (46) d'une tour de refroidissement refroidie par air (45).

17. Procédé selon l'une des revendications précédentes, **caractérisé en ce que**, au moyen de l'installation de pasteurisation (1), au moins temporairement, des récipients (6) comprenant un matériau métallique, plus particulièrement des récipients (6) comprenant un matériau de type aluminium, sont traités.

18. Installation de pasteurisation (1) pour l'exécution d'un procédé selon l'une des revendications 1 à 17, comprenant
une ou plusieurs zone(s) de traitement (2) avec des moyens d'introduction (3) pour l'application d'un liquide de traitement tempéré (4) sur un côté externe (5) de récipients (6),
un dispositif de transport (7) pour le transport des récipients (6) à travers la ou les zones de traitements (2),
et au moins un circuit de recirculation (11) pour la dérivation du liquide de traitement (4) à partir de la ou des zones de traitement (2) et pour le retour du liquide de traitement (4) dérivé dans une zone de traitement (2),
**caractérisée en ce que**
au moins un dispositif de nettoyage (16) est prévu, cet au moins un dispositif de nettoyage (16) étant relié en écoulement par une canalisation avec un moyen de prélèvement (17) pour le prélèvement d'un flux partiel (19) du liquide de traitement (4) dans l'au moins un circuit de recirculation (11) et cet au moins un dispositif de nettoyage (16) étant relié en écoulement par une canalisation avec un moyen de retour (18) pour le retour du flux partiel (19) dans un circuit de recirculation (11) ou une zone de traitement (2),
cet au moins un dispositif de nettoyage (16) comprenant un dispositif de filtration par membrane (23) pour la filtration du flux partiel (19),
et cet au moins un dispositif de nettoyage (16) comprenant, en écoulement après le dispositif de filtration par membrane (23), un dispositif d'échange ionique (24) comprenant au moins un échangeur de cations fortement acide (32).

19. Installation de pasteurisation selon la revendication 18, **caractérisée en ce que** le dispositif d'échange ionique (24) comprend au moins un échangeur d'anions fortement basique (33).

20. Installation de pasteurisation selon la revendication 18 ou 19, **caractérisée en ce que** le dispositif d'échange ionique (24) est relié en écoulement par une canalisation avec au moins un moyen de régénération (40, 41) pour la régénération du ou des échangeur(s) ioniques (32, 33).

21. Installation de pasteurisation selon l'une des revendications 18 à 20, **caractérisée en ce que**, en écoulement avant et après le dispositif d'échange ionique (24), est disposé un moyen de capteur pour la surveillance d'une teneur en ions dissous dans le flux partiel (19).

22. Installation de pasteurisation selon la revendication 21, **caractérisée en ce que**, en écoulement avant et après le dispositif d'échange ionique (24), est disposé un capteur de valeur de pH (34).

23. Installation de pasteurisation selon la revendication 19, **caractérisée en ce qu'**un rapport entre une capacité totale d'échange ionique de tous les échangeurs de cations fortement acides (32) existants et une capacité totale d'échange ionique de tous les échangeurs d'anions fortement basiques (33) existants est choisi, selon les besoins, en fonction d'une valeur de pH souhaitée du flux partiel (19) ou du liquide de traitement (4).

24. Installation de pasteurisation selon l'une des revendications 18 à 23, **caractérisée en ce que**, à l'au moins un dispositif de nettoyage (16), correspond un dispositif de régulation du débit (35).

25. Installation de pasteurisation selon l'une des revendications 18 à 24, **caractérisée en ce que** le dispositif d'échange ionique (24) est disposé, par l'intermédiaire d'au moins un moyen de régulation du débit (38), en écoulement, parallèlement à une conduite de débit (39) pour le flux partiel (19) dans l'au moins un dispositif de nettoyage (16).

26. Installation de pasteurisation selon la revendication 25, **caractérisée en ce que**, à chaque échangeur ionique (32, 33) du dispositif d'échange ionique (24), correspond un moyen de régulation du débit (38).

27. Installation de pasteurisation selon l'une des revendications 18 à 26, **caractérisée en ce que** l'au moins un dispositif de nettoyage (16) comprend un dispositif de traitement de liquide (42) supplémentaire avec des particules métalliques ou un treillis métallique comprenant du cuivre et/ou du zinc, ce dispositif de traitement de liquide (42) étant disposé, en écoulement, entre le dispositif de filtration par membrane (23) et le dispositif d'échange ionique (24).

28. Installation de pasteurisation selon l'une des revendications 18 à 27, **caractérisée en ce que** l'au moins un dispositif de nettoyage (16) comprend un dispositif d'adsorption (43), ce dispositif d'adsorption (43) étant disposé, en écoulement, après le dispositif d'échange ionique (24).

29. Installation de pasteurisation selon la revendication 28, **caractérisée en ce que** le dispositif d'adsorption (43) comprend un filtre à charbon actif (44).

30. Installation de pasteurisation selon l'une des revendications 18 à 29, **caractérisée en ce qu'**elle comprend une tour de refroidissement refroidie par air (45) qui comprend un échangeur therlique (46) pouvant être traversé par le liquide de traitement (4) en fonction des besoins.
